# EUROPEAN PATENT APPLICATION

(11) **EP 4 489 465 A1**
(43) Date of publication of application: **08.01.2025**
(21) Application number: 23777985.5
(22) Date of filing: 23.03.2023
(51) Int. Cl.: H04W 24/02

(54) **COMMUNICATION METHOD AND APPARATUS**

(30) Priority: 27.03.2022 CN 202210309349
(71) Applicant: Huawei Technologies Co., Ltd., Shenzhen, Guangdong 518129 (CN)
(72) Inventor: LI, Yongcui, Shenzhen, Guangdong 518129 (CN); LI, Yan, Shenzhen, Guangdong 518129 (CN); NI, Hui, Shenzhen, Guangdong 518129 (CN)
(74) Representative: Gill Jennings & Every LLP
(86) International application number: PCT/CN2023/083288
(87) International publication number: WO 2023/185615

(57) **Abstract**

This application provides a satellite communication method and apparatus. The method may include: A session management network element obtains first service information, where the service information indicates one or more services supported by a satellite. The session management network element determines, based on the first service information, whether a terminal device is allowed to access the services supported by the satellite. When determining that the terminal device is allowed to access at least one of the services supported by the satellite, the session management network element inserts a user plane network element on the satellite into a user plane path of the terminal device. According to the foregoing solutions, a delay in satellite communication of the terminal device can be reduced, and user experience can be improved.

## Description

This application claims priority to Chinese Patent Application No. 202210309349.8, filed with the China National Intellectual Property Administration on March 27, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, an important scenario to which a technology of integrating satellite communication and a 5G communication system (5th generation mobile communication system, 5GS) can be applied is satellite backhaul (satellite backhaul, SATB), in other words, a satellite link serves as a satellite backhaul link, and an access network device communicates with a core network device over the satellite backhaul link. In this scenario, a user plane function (user plane function, UPF) network element may be deployed on a satellite, to provide various service support. For example, the UPF on the satellite may be inserted into a user plane path to enable satellite edge computing or satellite local switching. However, currently, in a solution of inserting the UPF on the satellite into the user plane path, a user plane transmission delay is long, and user experience is poor.

### SUMMARY

This application provides a communication method and apparatus, to determine, based on whether a terminal device is allowed to access a service on a satellite, whether to insert a user plane network element on the satellite into a user plane path of the terminal device. Therefore, user experience can be improved.

According to a first aspect, a communication method is provided. The method may be performed by a session management network element, or may be performed by a component (for example, a chip or a circuit) of a session management network element. This is not limited. For ease of description, the following uses an example in which the method is performed by the session management network element.

The communication method includes: A session management network element obtains service information, where the service information indicates one or more services supported by a satellite. The session management network element determines, based on the service information, whether a terminal device is allowed to access the services supported by the satellite. When determining that the terminal device is allowed to access at least one of the services supported by the satellite, the session management network element inserts a user plane network element on the satellite into a user plane path of the terminal device.

With reference to the first aspect, in some implementations of the first aspect, the method further includes: When determining that the terminal device is not allowed to access any one of the services supported by the satellite, the session management network element does not insert the user plane network element on the satellite into the user plane path of the terminal device.

According to the foregoing solutions, when determining that the terminal device is allowed to access at least one of the services supported by the satellite, the session management network element inserts the user plane network element on the satellite into the user plane path of the terminal device. When determining that the terminal device is not allowed to access any one of the services supported by the satellite, the session management network element does not insert the user plane network element on the satellite into the user plane path of the terminal device. In view of this, the user plane network element on the satellite may be inserted into a user plane path of the terminal device that needs the user plane network element on the satellite to provide a service, to support the terminal device in accessing the service on the satellite. The user plane network element on the satellite is not inserted into a user plane path of a terminal device that does not need the user plane network element on the satellite to provide a service. Therefore, a length of the user plane path of the terminal device can be shortened, a transmission delay can be reduced, and user experience can be improved.

With reference to the first aspect, in some implementations of the first aspect, the session management network element obtaining service information includes: The session management network element determines a first data network access identifier based on the location information of the terminal device and the satellite backhaul type information corresponding to the terminal device. The session management network element determines the service information based on the first data network access identifier and first configuration information, where the first configuration information includes a correspondence between the first data network access identifier and the service information.

According to the foregoing solutions, the session management network element may first determine the first data network access identifier, and then determine the service information based on the first data network access identifier and the first configuration information, that is, determine the services supported by the satellite. The session management network element may determine the first data network access identifier with reference to the location information of the terminal device and the satellite backhaul type information corresponding to the terminal device, so that the first data network access identifier corresponding to the satellite can be accurately determined.

With reference to the first aspect, in some implementations of the first aspect, that the session management network element determines the first data network access identifier based on the location information of the terminal device and the satellite backhaul type information corresponding to the terminal device includes: The session management network element determines one or more second data network access identifiers based on the location information of the terminal device. The session management network element determines the first data network access identifier from the one or more second data network access identifiers based on the satellite backhaul type information.

According to the foregoing solutions, the session management network element determines the first data network access identifier with reference to the location information of the terminal device and the satellite backhaul type information corresponding to the terminal device. Specifically, when the location information of the terminal device corresponds to the one or more second data network access identifiers, the session management network element may further determine, with reference to the satellite backhaul type information, the first data network access identifier corresponding to the satellite.

With reference to the first aspect, in some implementations of the first aspect, that the session management network element determines the data network access identifier based on location information of the terminal device and the satellite backhaul type information corresponding to the terminal device includes: The session management network element determines a data network access identifier based on the location information of the terminal device, the satellite backhaul type information, and constellation information of the satellite.

According to the foregoing solutions, the session management network element may determine the data network access identifier with reference to the location information of the terminal device, the satellite backhaul type information of the terminal device, and the constellation information of the satellite. For example, when the terminal device has a plurality of backhaul links, there may be a plurality of data network access identifiers corresponding to the location information of the terminal device and the satellite backhaul type information of the terminal device. In this case, the data network access identifier corresponding to the satellite may be determined with reference to the constellation information of the satellite, to determine the services supported by the satellite.

With reference to the first aspect, in some implementations of the first aspect, that the session management network element determines the data network access identifier based on location information of the terminal device and the satellite backhaul type information corresponding to the terminal device includes: The session management network element determines a data network access identifier based on the location information of the terminal device, the satellite backhaul type information, and identification information of the satellite.

According to the foregoing solutions, the session management network element may determine the data network access identifier with reference to the location information of the terminal device, the satellite backhaul type information of the terminal device, and the identification information of the satellite. For example, when the terminal device has the plurality of backhaul links, there may be the plurality of data network access identifiers corresponding to the location information of the terminal device and the satellite backhaul type information of the terminal device. In this case, the data network access identifier corresponding to the satellite may be determined with reference to the identification information of the satellite, to determine the services supported by the satellite.

With reference to the first aspect, in some implementations of the first aspect, the session management network element obtaining the service information includes: The session management network element obtains the identification information of the satellite. The session management network element determines the service information based on the identification information of the satellite and second configuration information, where the second configuration information includes a correspondence between the identification information of the satellite and the service information.

According to the foregoing solutions, the session management network element may first obtain the identification information of the satellite, and then determine the service information based on the identification information of the satellite and the second configuration information, that is, determine the services supported by the satellite.

With reference to the first aspect, in some implementations of the first aspect, the session management network element obtaining the identification information of the satellite includes: The session management network element receives the identification information of the satellite from a mobility management network element.

According to the foregoing solutions, the session management network element may obtain the identification information of the satellite via the mobility management network element, so that the session management network element may determine the service information based on the identification information of the satellite.

With reference to the first aspect, in some implementations of the first aspect, the session management network element obtaining the identification information of the satellite includes: The session management network element obtains the identification information of the satellite based on the location information of the terminal device and the constellation information of the satellite.

According to the foregoing solutions, the session management network element may determine the identification information of the satellite by the session management network element based on the location information of the terminal device and the constellation information, so that the session management network element may determine the service information based on the identification information of the satellite.

With reference to the first aspect, in some implementations of the first aspect, the session management network element obtaining the service information includes: The session management network element obtains the constellation information of the satellite. The session management network element determines the service information based on the constellation information of the satellite and third configuration information, where the third configuration information includes a correspondence between the constellation information of the satellite and the service information.

According to the foregoing solutions, the session management network element may first determine the constellation information of the satellite, and then determine the service information based on the constellation information, that is, determine the services supported by the satellite. For example, when a satellite in a constellation has a same capability, that is, supports a same service, the services supported by the satellite may be determined based on the constellation information of the satellite.

With reference to the first aspect, in some implementations of the first aspect, that the session management network element determines, based on the service information, whether the terminal device is allowed to access the services supported by the satellite includes: The session management network element receives subscription data of the terminal device from a data management network element. The session management network element determines, based on the subscription data and the service information, whether the terminal device is allowed to access the services supported by the satellite.

According to the foregoing solutions, the session management network element may determine, based on the subscription data and the service information, whether the terminal device is allowed to access the services supported by the satellite, so that the session management network element may determine, based on a determination result, whether to insert the user plane network element on the satellite into the user plane path of the terminal device.

With reference to the first aspect, in some implementations of the first aspect, the subscription data includes an identifier of the service that the terminal device is allowed to access. That the session management network element determines, based on the service information, whether the terminal device is allowed to access the services supported by the satellite includes: If the service that the terminal device is allowed to access includes at least one service indicated by the service information, the session management network element determines that the terminal device is allowed to access the services supported by the satellite.

According to the foregoing solutions, if the service that is indicated by the subscription data and that is allowed to access by the terminal device includes at least one of the services supported by the satellite, the session management network element determines that the terminal device is allowed to access the services supported by the satellite. In other words, in this case, the session management network element may insert the user plane network element on the satellite into the user plane path of the terminal device.

With reference to the first aspect, in some implementations of the first aspect, that the session management network element determines, based on the service information, whether the terminal device is allowed to access the services supported by the satellite includes: The session management network element receives policy information of the terminal device from a policy control network element, where the policy information includes the identifier of the service that the terminal device is allowed to access. The session management network element determines, based on the policy information and the service information, whether the terminal device is allowed to access the services supported by the satellite.

According to the foregoing solutions, the session management network element may determine, based on a policy and the service information, whether the terminal device is allowed to access the services supported by the satellite, so that the session management network element may determine, based on a determination result, whether to insert the user plane network element on the satellite into the user plane path of the terminal device.

With reference to the first aspect, in some implementations of the first aspect, the satellite backhaul type information indicates the terminal device to access the satellite by using geostationary earth orbit satellite backhaul.

According to a second aspect, a communication method is provided. The method may be performed by a mobility management network element, or may be performed by a component (for example, a chip or a circuit) of a mobility management network element. This is not limited. For ease of description, the following uses an example in which the method is performed by the mobility management network element.

The communication method includes: The mobility management network element determines a first data network access identifier based on location information of a terminal device and satellite backhaul type information corresponding to the terminal device. The mobility management network element sends the first data network access identifier to a session management network element.

According to the foregoing solutions, the mobility management network element may provide the first data network access identifier to the session management network element. Therefore, the session management network element may determine, based on the first data network access identifier, a service supported by a satellite and accessed by the terminal device, and may further determine, based on a status of determining whether the terminal device is allowed to access the service on the satellite, whether to insert a user plane network element on the satellite into a user plane path of the terminal device.

With reference to the second aspect, in some implementations of the second aspect, that the mobility management network element determines the first data network access identifier based on the location information of the terminal device and the satellite backhaul type information corresponding to the terminal device includes: The mobility management network element determines one or more second data network access identifiers based on the location information of the terminal device. The mobility management network element determines the first data network access identifier from the one or more second data network access identifiers based on the satellite backhaul type information.

According to the foregoing solutions, the mobility management network element determines the first data network access identifier with reference to the location information of the terminal device and the satellite backhaul type information corresponding to the terminal device. Specifically, when the location information of the terminal device corresponds to the one or more second data network access identifiers, the mobility management network element may further determine, with reference to the satellite backhaul type information, the first data network access identifier corresponding to the satellite.

With reference to the second aspect, in some implementations of the second aspect, that the mobility management network element determines the first data network access identifier based on location information of the terminal device and the satellite backhaul type information corresponding to the terminal device includes: The mobility management network element determines the first data network access identifier based on the location information of the terminal device, the satellite backhaul type information corresponding to the terminal device, and constellation information of the satellite.

According to the foregoing solutions, the mobility management network element may determine a data network access identifier with reference to the location information of the terminal device, the satellite backhaul type information of the terminal device, and the constellation information of the satellite. For example, when the terminal device has a plurality of backhaul links, there may be a plurality of data network access identifiers corresponding to the location information of the terminal device and the satellite backhaul type information of the terminal device. In this case, the data network access identifier corresponding to the satellite may be determined with reference to the constellation information of the satellite, to determine the services supported by the satellite.

With reference to the second aspect, in some implementations of the second aspect, the satellite backhaul type information indicates the terminal device to access the satellite by using geostationary earth orbit satellite backhaul.

According to a third aspect, a communication method is provided, where the method includes: A mobility management network element determines, based on location information of a terminal device, identification information of a satellite accessed by the terminal device. The mobility management network element sends the identification information of the satellite to a session management network element.

According to the foregoing solutions, the mobility management network element may provide the identification information of the satellite to the session management network element. Therefore, the session management network element may determine, based on the identification information of the satellite, a service supported by the satellite and accessed by the terminal device, and may further determine, based on a status of determining whether the terminal device is allowed to access the service on the satellite, whether to insert a user plane network element on the satellite into a user plane path of the terminal device.

According to a fourth aspect, a communication method is provided. The method includes: A session management network element determines whether a terminal device is allowed to perform local data switching under a satellite. When determining that the terminal device is allowed to perform local data switching under the satellite, the session management network element inserts a user plane network element on the satellite into a user plane path of the terminal device.

With reference to the fourth aspect, in some implementations of the fourth aspect, the method further includes: When determining that the terminal device is not allowed to perform local data switching under the satellite, the session management network element inserts the user plane network element on the satellite into the user plane path of the terminal device.

According to the foregoing solutions, when the terminal device needs to perform local data switching under the satellite, the user plane network element on the satellite may be inserted into the user plane path of the terminal device, to support the terminal device in performing local data switching under the satellite. When the terminal device does not need to perform local data switching under the satellite, the user plane network element on the satellite is not inserted into a user plane path of a terminal device. Therefore, a length of the user plane path of the terminal device can be shortened, a transmission delay can be reduced, and user experience can be improved.

With reference to the fourth aspect, in some implementations of the fourth aspect, that the session management network element determines whether the terminal device is allowed to perform local data switching under the satellite includes: The session management network element receives subscription data of the terminal device from a data management network element. The session management network element determines, based on the subscription data, whether the terminal device is allowed to perform local data switching under the satellite.

With reference to the fourth aspect, in some implementations of the fourth aspect, that the session management network element determines whether the terminal device is allowed to perform local data switching under the satellite includes: The session management network element receives policy information of the terminal device from a policy control network element. The session management network element determines, based on the policy information, whether the terminal device is allowed to perform local data switching under the satellite.

According to a fifth aspect, a communication apparatus is provided. The apparatus is configured to perform any method provided in the first aspect to the fourth aspect. Specifically, the apparatus may include units and/or modules, for example, a processing module and/or a transceiver module (which may also be referred to as a communication module), configured to perform the methods provided in the first aspect to the fourth aspect. In an implementation, the apparatus is a network device. For example, the apparatus is a session management network element or a mobility management network element. When the apparatus is the network device, the communication module may be a transceiver or an input/output interface, and the processing module may be a processor.

In an implementation, the apparatus is a chip, a chip system, or a circuit configured in the network device. When the apparatus is the chip, the chip system, or the circuit configured in a communication device, the communication module may be the input/output interface, an interface circuit, an output circuit, an input circuit, a pin, a related circuit, or the like on the chip, the chip system, or the circuit, and the processing module may be the processor, a processing circuit, a logic circuit, or the like.

In a possible case, the apparatus is the session management network element, or is a chip, a chip system, or a circuit in the session management network element. In this case, the apparatus may include units and/or modules, for example, a processing unit and/or a communication unit, configured to perform the method provided in the first aspect or the fourth aspect.

In another possible case, the apparatus is the mobility management network element, or is a chip, a chip system, or a circuit in the mobility management network element. In this case, the apparatus may include units and/or modules, for example, a processing module and/or a transceiver module, configured to perform the method provided in the second aspect or the third aspect.

According to a sixth aspect, a communication apparatus is provided. The apparatus includes: a storage, configured to store a program; and a processor, configured to execute the program stored in the storage. When the program stored in the storage is executed, the processor is configured to perform any method provided in the first aspect to the fourth aspect.

According to a seventh aspect, this application provides a processor, configured to perform the method provided in each of the foregoing aspects. During performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver performs transmission. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving the request message included in the foregoing method may be understood as receiving the input information by the processor.

Unless otherwise specified, or if operations, for example, transmitting, sending, and obtaining/receiving related to the processor do not contradict an actual function or internal logic of the operations in related descriptions, all the operations may be more generally understood as operations, for example, outputting, receiving, and inputting of the processor, instead of operations of transmitting, sending, and receiving directly performed by a radio frequency circuit and an antenna.

During implementation, the processor may be a processor specially configured to perform these methods, or a processor, for example, a general-purpose processor, that executes computer instructions in the storage to perform these methods. The storage may be a non-transitory (non-transitory) storage, for example, a read-only memory (read-only memory, ROM). The memory and the processor may be integrated on a same chip, or may be separately disposed on different chips. A type of the storage and a manner of disposing the storage and the processor are not limited in this embodiment of this application.

According to an eighth aspect, a computer-readable medium is provided. The computer-readable medium stores program code to be executed by a device, and the program code is used for performing any method provided in the first aspect to the fourth aspect.

According to a ninth aspect, a computer program product including instructions is provided. When the computer program product is run on a computer, the computer is enabled to perform any method provided in the first aspect to the fourth aspect.

According to a tenth aspect, a chip is provided. The chip includes a processor and a communication interface. The processor reads, by using the communication interface, instructions stored in a storage, to perform any method provided in the first aspect to the fourth aspect.

Optionally, in an implementation, the chip may further include the storage. The storage stores the instructions. The processor is configured to execute the instructions stored in the storage. When the instructions are executed, the processor is configured to perform any method provided in the first aspect to the fourth aspect.

According to an eleventh aspect, a communication system is provided, including one or more of the foregoing session management network elements and the foregoing mobility management network elements.

### BRIEF DESCRIPTION OF DRAWINGS

FIG. 1 is a schematic diagram of a network architecture to which an embodiment of this application is applicable;
FIG. 2 is a schematic diagram of a communication architecture of a satellite backhaul link;
FIG. 3 is a schematic diagram of a communication architecture of satellite edge computing;
FIG. 4 is a schematic diagram of a communication architecture of satellite local data switching;
FIG. 5 is a schematic block diagram of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of yet another communication method according to an embodiment of this application;
FIG. 9 is a schematic flowchart of still yet another communication method according to an embodiment of this application;
FIG. 10 is a schematic flowchart of a further communication method according to an embodiment of this application;
FIG. 11 is a schematic block diagram of a communication apparatus according to an embodiment of this application;
FIG. 12 is a schematic block diagram of a communication apparatus according to another embodiment of this application; and
FIG. 13 is a schematic block diagram of communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise stated, "a plurality of" means two or more than two.

In embodiments of this application, unless otherwise specified or there is a logic conflict, terms and/or descriptions between different embodiments are consistent and may be mutually referenced, and technical features in different embodiments may be combined into a new embodiment based on an internal logical relationship thereof.

It may be understood that various numbers included in this application are merely used for differentiation for ease of description, and are not used for limiting the scope of this application. Sequence numbers of the foregoing processes do not mean execution sequences, and execution sequences of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, and machine type communication (machine type communication, MTC), an internet of things (internet of things, IoT) communication system, or another communication system.

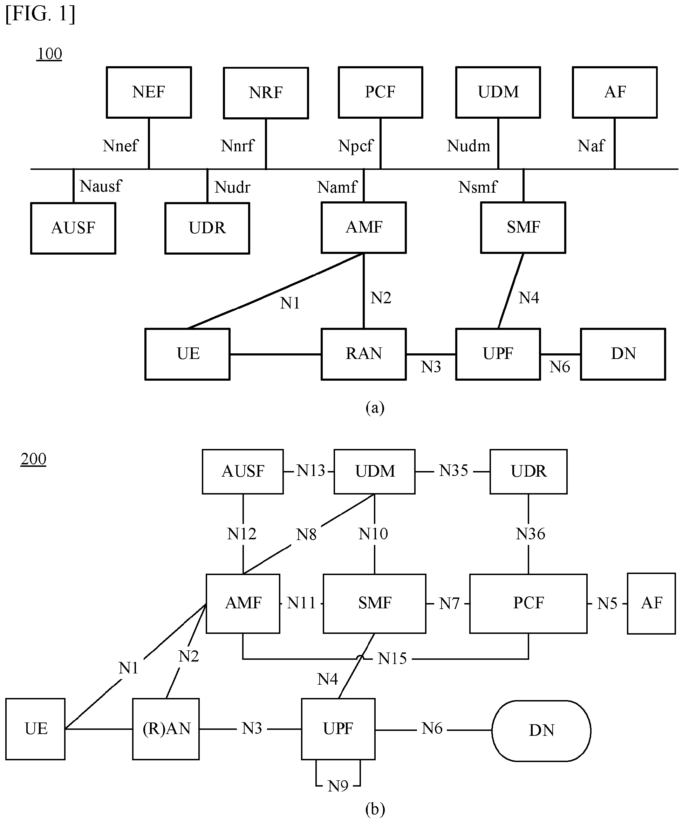

With reference to FIG. 1, the following uses an example for describing a 5G system to which embodiments of this application are applicable. It should be understood that the 5G system described in this specification is merely an example, and should not constitute any limitation on this application.

It should be further understood that some network elements in the 5G system may communicate with each other by using a service-based interface or a point-to-point interface. The following separately describes a 5G system framework based on service-based interfaces with reference to (a) in FIG. 1 and a 5G system framework based on point-to-point interfaces with reference to (b) in FIG. 1.

In an example for description, (a) in FIG. 1 is a schematic diagram of an architecture of the 5G system 100 to which an embodiment of this application is applicable. FIG. 1 is a schematic diagram of a 5G network architecture based on the point-to-point interfaces. As shown in (a) in FIG. 1, the network architecture may include but is not limited to the following network elements (or referred to as functional network elements, functional entities, nodes, or devices):
a (radio) access network device ((radio) access network, (R)AN), an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), a unified data management (unified data management, UDM), a BSF network element, a unified data repository (unified data repository, UDR), and the like.

The following briefly describes the network elements shown in (a) in FIG. 1.
1. User equipment (user equipment, UE): The user equipment may be referred to as a terminal device (terminal device), a terminal apparatus, an access terminal, a subscriber unit, a subscriber station, a mobile station (mobile station, MS), a mobile terminal (mobile terminal, where MT), a remote station, a remote terminal, a mobile device, a user terminal, a terminal, a wireless communication device, a user agent, or a user apparatus. The terminal device may be a device that provides voice/data connectivity to a user, for example, a handheld device or vehicle-mounted device with a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, and a terminal device in a future evolved public land mobile network (public land mobile network, PLMN).

In addition, the terminal device may alternatively be a terminal device in an internet of things (Internet of things, IoT) system. An IoT is an important part in future development of information technologies. A main technical feature of the IoT is to connect a thing to a network by using a communication technology. Therefore, an intelligent network for human-machine interconnection and thing-thing interconnection is implemented. An IoT technology may achieve massive connections, intensive coverage, and power saving for the terminal by using, for example, a narrow band (narrow band, NB) technology.

In addition, the terminal device may alternatively include an intelligent printer, a train detector, and the like. Main functions of the terminal device include: collecting data (which is a function of some terminal devices), receiving control information and downlink data of a network device and sending an electromagnetic wave, and transmitting uplink data to the network device.

It should be understood that the user equipment may be any device that may access the network. The terminal device may communicate with the access network device by using a specific air interface technology.

Optionally, the user equipment may be configured to serve as a base station. For example, the user equipment may serve as a scheduling entity that provides a sidelink signal between user equipment devices in V2X, D2D, or the like. For example, the cellular phone and a car communicate with each other through the sidelink signal. The cellular phone communicates with a smart home device without relaying a communication signal through the base station.

2. (Radio) access network ((radio) access network, (R)AN) device: configured to provide a network access function for authorized user equipment in a specific area, and can use transmission tunnels of different service quality based on a level, a service requirement, and the like of the user equipment.

An (R)AN can manage radio resources and provide an access service for the user equipment, to forward a control signal and user equipment data between the user equipment and a core network. The (R)AN may also be understood as a base station in a conventional network.

For example, the access network device in this embodiment of this application may be any communication device that has a wireless transceiver function and that is configured to communicate with the user equipment. The access network device includes but is not limited to an evolved NodeB (evolved NodeB, eNB), a gNB or a transmission point (TRP or TP) in a 5G system, for example, an NR system, or one antenna panel or one group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and the DU. The gNB may further include an active antenna unit (active antenna unit, AAU). The CU performs a part of functions of the gNB, and the DU performs a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling, for example, RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in the core network (core network, CN). This is not limited in this application.

In a satellite communication scenario, the radio access network device may also be referred to as a radio satellite access network site (or a radio satellite access network device or a radio satellite access network), a satellite access network site (or a satellite access network device or a satellite access network), or is referred to as a satellite network site (or a satellite network device or a satellite network). This is not limited in this embodiment of this application. The satellite access network may be deployed in a plurality of manners. For example, a same PLMN has both a ground 3GPP access network and a satellite 3GPP access network, and the two access networks each have an independent interface with the core network. For another example, different core networks share a same satellite access network, and a shared satellite access network includes an available PLMN in broadcast system information. For another example, the ground access network and the satellite access network are independent, in other words, the ground access network and the satellite access network each correspond to an independent PLMN. For another example, a satellite in the sky is merely responsible for signal transfer and does not have a function of accessing a network, and in this scenario, satellite access may also be referred to as satellite backhaul. In the foregoing non-satellite backhaul scenario, the satellite may include all or a part of functions of accessing the network. This is not limited in this application. When all functions of the base station are integrated on the satellite, the satellite access network device may be understood as a device with a part of functions of the base station that are on the satellite, and both signaling and data related to the access network are processed on the satellite. When a part of functions of the base station are integrated on the satellite, and a part of functions are located on the ground, the satellite access network device may be understood as a device with a part of functions of the base station that are on the satellite, and with a part of functions of the base station that are on the ground. The signaling and the data related to the access network are processed partially on the satellite and partially on the ground. During the satellite backhaul, the satellite access network device may be understood as a base station on the ground. Both the signaling and the data related to the access network are processed on the ground. The satellite transparently transmits the signaling and the data between a terminal device and the satellite access network.

3. User plane function (user plane function, UPF) network element: The user plane function network element is configured to perform packet routing and forwarding, quality of service (quality of service, QoS) processing of user plane data, and the like.

In a 5G communication system, a user plane network element may be the user plane function (user plane function, UPF) network element. In a future communication system, the user plane network element may still be the UPF network element, or may have another name. This is not limited in this application.

4. Access and mobility management function (access and mobility management function, AMF) network element: The access and mobility management function network element is mainly configured for mobility management, access management, and the like, and may be configured to implement a function, for example, access authorization/authentication, other than session management in an MME function.

In a future communication system, an access and mobility management device may still be an AMF, or may have another name. This is not limited in this application.

5. Session management function (session management function, SMF) network element: The session management function network element is mainly configured for session management, internet protocol (internet protocol, IP) address assignment and management of user equipment, selection of a manageable user plane function, a termination point of a policy control and charging function interface, downlink data notification, and the like.

In a future communication system, the session management network element may still be the SMF network element, or may have another name. This is not limited in this application.

6. Policy control function (policy control function, PCF) network element: The policy control function network element is a unified policy framework for guiding network behavior, provide policy rule information for a control plane function network element (for example, an AMF or an SMF), and the like.

In a future communication system, the policy control network element may still be the PCF network element, or may have another name. This is not limited in this application.

7. Application function (application function, AF): The application function is configured to perform application-affected data routing, access a network exposure function network element in a wireless manner, exchange with a policy framework for policy control, and the like.

In a future communication system, an application network element may still be the AF network element, or may have another name. This is not limited in this application.

8. Unified data management (unified data management, UDM) network element: The unified data management network element is configured to process a UE identifier, access authentication, registration, mobility management, and the like.

In a future communication system, unified data management may still be the UDM network element, or may have another name. This is not limited in this application.

9. Authentication server (authentication server function, AUSF) network element: The authentication server network element is configured to authenticate a service, generate a key for bidirectional authentication on user equipment, and support a unified authentication framework.

In a future communication system, the authentication server function network element may still be the AUSF network element, or may have another name. This is not limited in this application.

10. Network data analytics function (network data analytics function, NWDAF) network element: The network data analytics function network element is configured to: identify a network slice instance and load load level information of the network slice instance. The network data analytics function enables an NF consumer to subscribe to or unsubscribe from a periodic notification and notify the consumer when a threshold is exceeded.

In a future communication system, the network data analytics function network element may still be the NWDAF network element, or may have another name. This is not limited in this application.

11. Data network (data network, DN): The DN is a network located outside a carrier network, where the carrier network may connect a plurality of DNs, a plurality of services may be deployed on the DN, and the DN may provide a service, for example, data and/or voice for a terminal device. For example, the DN is a private network of a specific smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a specific company, a mobile phone or a computer of an employee of the company may be the terminal device, and the mobile phone or the computer of the employee may access information, data resources, and the like in the internal office network of the company.

Nausf, Nnef, Npcf, Nudm, Naf, Namf, Nsmf, N1, N2, N3, N4, and N6 in (a) in FIG. 1 are interface sequence numbers. For meanings of the interface sequence numbers, refer to meanings defined in a 3GPP standard protocol. This is not limited herein.

In the network architecture shown in (a) in FIG. 1, network elements may communicate with each other by using interfaces shown in the figure. As shown in the figure, the UE and the AMF may exchange with each other by using an N1 interface. An exchange message may be referred to as, for example, an N1 message (N1 Message). The RAN and the AMF may exchange with each other by using an N2 interface. The N2 interface may be configured to send a non-access stratum (non-access stratum, NAS) message and the like. The RAN and the UPF may exchange with each other by using an N3 interface. The N3 interface may be configured to transmit user plane data and the like. The SMF and the UPF may exchange with each other by using an N4 interface. The N4 interface may be configured to transmit information, for example, tunnel identifier information of an N3 connection, data buffering indication information, and a downlink data notification message. The UPF and the DN may exchange with each other by using an N6 interface. The N6 interface may be configured to transmit the user plane data and the like. Relationships between other interfaces and network elements are shown in (a) in FIG. 1. For brevity, details are not described herein.

(b) in FIG. 1 is a schematic diagram of a 5G network architecture based on the point-to-point interfaces. For descriptions of functions of network elements, refer to descriptions of functions of corresponding network elements in (a) in FIG. 1. Details are not described again. A main difference between (b) in FIG. 1 and (a) in FIG. 1 lies in that interfaces between network elements in (b) in FIG. 1 is point-to-point interfaces instead of service-based interfaces.

In the architecture shown in (b) in FIG. 1, names and functions of the interfaces between the network elements are as follows:
(1) N7: an interface between the PCF and the SMF, where the N7 is configured to deliver a protocol data unit (protocol data unit, PDU) session granularity control policy and a service data flow granularity control policy.
(2) N15: an interface between the PCF and the AMF, where the N15 is configured to deliver a UE policy and an access control-related policy.
(3) N5: an interface between the AF and the PCF, where the N5 is configured to deliver an application service request, and report a network event.
(4) N4: an interface between the SMF and the UPF, where the N4 is configured to transfer information between a control plane and a user plane, including delivery of a forwarding rule, a QoS control rule, a traffic statistics rule, and the like from the control plane to the user plane, and reporting of user plane information.
(5) N11: an interface between the SMF and the AMF, where the N11 is configured to transfer PDU session tunnel information between the RAN and the UPF, transfer a control message to be sent to UE, transfer radio resource control information to be sent to the RAN, and the like.
(6) N2: an interface between the AMF and the RAN, where the N2 is configured to transfer radio bearer control information from a core network side to the RAN, and the like.
(7) N1: an interface between the AMF and the UE, where the N1 is access-irrelevant, is configured to transfer the QoS control rule to the UE, and the like.
(8) N8: an interface between the AMF and the UDM, where the N8 is configured by the AMF to obtain access and mobility management-related subscription data and authentication data from the UDM, is configured by the AMF to register current mobility management-related information of the UE with the UDM, and the like.
(9) N10: an interface between the SMF and the UDM, where the N10 is configured by the SMF to obtain session management-related subscription data from the UDM, is configured by the SMF to register current session-related information of the UE with the UDM, and the like.
(10) N35: an interface between the UDM and the UDR, where the N35 is configured by the UDM to obtain user subscription data information from the UDR.
(11) N36: an interface between the PCF and the UDR, where the N36 is configured by the PCF to obtain policy-related subscription data and application data-related information from the UDR.
(12) N12: an interface between the AMF and the AUSF, where the N12 is configured by the AMF to initiate an authentication procedure to the AUSF, and an SUCI may be carried as a subscription identifier.
(13) N13: an interface between the UDM and the AUSF, where the N13 is configured by the AUSF to obtain a user authentication vector from the UDM, to perform the authentication procedure.

It should be understood that the foregoing names are defined merely for distinguishing between different functions, and should not constitute any limitation on this application. This application does not exclude a possibility of using other names in a 5G network and another future network. For example, in a 6G network, a part of or all of the foregoing network elements may still use terms in the 5G, or may use other names. Names of the interfaces between the network elements in (a) in FIG. 1 are merely examples, and the interfaces may have other names during specific implementation. This is not specifically limited in this application. In addition, names of messages (or signaling) transmitted between the network elements are merely examples, and do not constitute any limitation on functions of the messages.

It may be understood that the network elements or the functions may be network elements in a hardware device, may be software functions running on dedicated hardware, or may be virtualized functions instantiated on a platform (for example, a cloud platform). For ease of description, this application is subsequently described by using an example in which a network device is an access and mobility management network element AMF, and a base station is a radio access network RAN.

It should be understood that the foregoing network architecture used in embodiments of this application is merely an example, and a network architecture to which embodiments of this application is applicable is not limited thereto. Any network architecture that can implement functions of the foregoing network elements is applicable to embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to a similar technical problem.

Various aspects or features of embodiments of this application may be implemented as methods, or implemented by using an apparatus or a product of standard programming and/or engineering technologies. The term "product" used in this application covers a computer program that can be accessed from any computer-readable component, carrier or medium. For example, a computer-readable medium may include but is not limited to: a magnetic storage component (for example, a hard disk drive, a floppy disk or a magnetic tape), an optical disc (for example, a compact disc (compact disc, CD), a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or another machine-readable medium that are configured to store information. The term "machine-readable medium" may include but is not limited to a radio channel, and various other media that can store, include and/or carry instructions and/or data.

For ease of understanding of the technical solutions in embodiments of this application, before the solutions in embodiments of this application are described based on the 5G architecture, some 5G terms or concepts that may be included in embodiments of this application and a network element that may be included in this application but is not shown in the foregoing network architecture are first described briefly.

### 1. Satellite communication

A satellite communication technology is a technology in which a wireless communication device on the ground accesses a network via a satellite, or a technology in which wireless communication devices on the ground communicate with each other by using a satellite as a relay. Compared with a conventional mobile communication system, the satellite communication has a wider coverage area and can overcome natural and geographical obstacles such as oceans, deserts, and mountains.

Based on the communication system architecture shown in FIG. 1, the satellite communication and a 5G communication system (5th generation mobile communication system, 5GS) may be converged. Currently, integrating the satellite communication and the 5GS may include two scenarios. A first scenario is that the satellite serves as 3GPP access, and UE accesses the 5GS via the satellite. A second scenario is that a satellite link serves as a backhaul link, and a RAN communicates with a 5G core (5G core, 5GC) network over the backhaul link (for example, the backhaul link provides a bearer for N3 or N9).

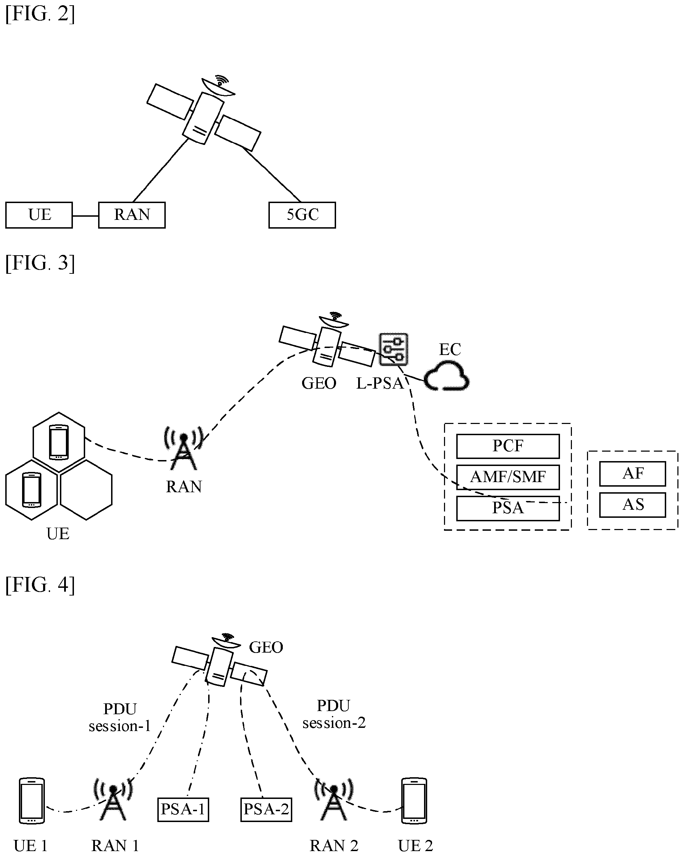

This application is mainly for a scenario in which a satellite link serves as a 5G backhaul link shown in FIG. 2. FIG. 2 is a schematic diagram of a scenario in which satellite communication and a 5GS are converged. It may be seen from FIG. 2 that the satellite link serves as the 5G backhaul link, and a RAN is connected to a 5GC over the 5G backhaul link. The 5GC may include core network elements, for example, the AMF, the AF, and the UPF shown in FIG. 1.

It should be noted that FIG. 2 shows merely one satellite. In an actual communication scenario, there may be a plurality of satellites, and types of the plurality of satellites may be the same or different. There is a radio link between different satellites, so that signaling exchange and user data transmission between access network devices can be completed.

Different types of satellites may have different coverage areas, mobility features, propagation delays, jitters, and the like due to different orbit altitudes. For example, there are following several types of satellites: a geosynchronous satellite (geostationary equatorial orbit, GEO), a low earth orbit (low earth orbit, LEO) satellite polar orbit constellation, a medium earth orbit (medium earth orbit, MEO) satellite, and other satellites (Other SATs).

### 2. Constellation information

A satellite constellation is a collection of satellites that are launched into an orbit and can work normally, and is usually a network including some satellites that are configured in a specific manner. Main satellite constellations include a global positioning system (global positioning system, GPS) satellite constellation, a GLONASS (GLONASS) satellite constellation, a Galileo Galileo satellite constellation, a Beidou satellite constellation, and the like.

Common constellation types include a low earth orbit (low earth orbit, LEO) satellite polar orbit constellation, a medium earth orbit (medium earth orbit, MEO) satellite polar orbit constellation, a LEO inclined orbit constellation, a MEO inclined orbit constellation, and the like.

The constellation information is information related to the satellite constellation, and mainly includes an orbital plane parameter (Orbital plane parameter), a satellite level parameter (Satellite level parameter), and the like. In some scenarios, the constellation information may also be referred to as ephemeris information.

### 3. Satellite edge computing

The satellite edge computing may be enabled by deploying an edge service on a satellite. As shown in FIG. 3, a UE establishes a PDU session, and a user plane path is from the UE, to a RAN, to a GEO UPF (that is, an L-PSA in the figure), and finally to a ground PSA (where the user plane path is shown by a dashed line in the figure). The satellite edge computing (Edge computing, EC) may be enabled via a UPF deployed on the satellite. In this way, a data packet for the UE to access an EC service on the satellite may be directly distributed to an edge computing platform via the UPF on the satellite. This avoids a case that the packet is first sent to the ground PSA, and then is sent by the ground PSA to the edge computing platform. Therefore, the user plane path is shortened, a service communication delay is reduced, and user experience is improved.

### 4. Satellite local switching

The satellite local switching (local switch) may be enabled via a UPF deployed on a satellite. The satellite local switching may also be referred to as local data switching under the satellite. As shown in FIG. 4, UE 1 establishes a PDU session-1 by using satellite backhaul, and a user plane path is from the UE, to a RAN 1, to a GEO UPF-1, and finally to an (optional) ground PSA-1 (as shown by a dashed line in the figure). UE 2 establishes a PDU session-2 by using the satellite backhaul, and a user plane path is from the UE, to a RAN 2, to a GEO UPF-2, and finally to an (optional) ground PSA-2 (as shown by the dashed line in the figure). The GEO UPF-1 and the GEO UPF-2 may be the same or different. Direct communication, that is, local switching (local switching) between the UE 1 and the UE 2 is enabled via the UPF on the satellite (that is, the GEO UPF-1 and the GEO UPF-2), so that a communication path between the UE 1 and the UE 2 can be shortened and user experience can be improved.

The foregoing describes scenarios to which embodiments of this application can be applied with reference to FIG. 1, and further briefly describes basic concepts in this application. The following describes in detail a communication method and apparatus provided in this application with reference to the accompanying drawings.

A specific structure of an entity for executing the method provided in embodiments of this application is not particularly limited in the following embodiments, provided that a program that records code of the method provided in embodiments of this application can be run, to perform communication according to the method provided in embodiments of this application. For example, the method provided in embodiments of this application may be performed by a core network device and a terminal device, or may be a functional module that is in a core network device or a terminal device and that can invoke and execute a program.

For ease of understanding of embodiments of this application, the following several descriptions are provided.

First, in this application, "indicate" may be understood as "enable", and "enable" may include directly enabling and indirectly enabling. When description of specific piece of information is used for enabling A, it may be included that the information directly enables A or indirectly enables A. However, this does not necessarily mean that the information carries A.

Information enabled by the information is referred to as to-be-enabled information. During specific implementation, there are many manners of enabling the to-be-enabled information. For example, but not limited to, the to-be-enabled information may be directly enabled, for example, the to-be-enabled information or an index of the to-be-enabled information. Alternatively, the to-be-enabled information may be indirectly enabled by enabling another piece of information, where there is an association between the another piece of information and the to-be-enabled information. Alternatively, merely a part of the to-be-enabled information may be enabled, and another part of the to-be-enabled information is known or pre-agreed on. For example, specific information may alternatively be enabled by using an arrangement sequence of pieces of information that are pre-agreed on (for example, stipulated in a protocol), to reduce enabling overheads to some extent. In addition, a common part of the pieces of information may be identified and uniformly enabled, to reduce enabling overheads caused by separately enabling the pieces of information.

Second, "first", "second", and various numerical numbers (for example, "#1" and "#2") shown in this application are merely for ease of description, and are used for distinguishing between objects, but are not intended to limit the scope of embodiments of this application, for example, are used for distinguishing between different messages, but are not used for describing a particular order or sequence. It should be understood that the objects described in this way are interchangeable in a proper case, so that a solution other than embodiments of this application can be described.

Third, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to the process, method, product, or device.

Fourth, in this application, "pre-configuration" may include a pre-definition, for example, a protocol definition. "Pre-definition" may be implemented by pre-storing corresponding code or a table in a device (for example, including each of network elements), or may be implemented in another manner that may indicate related information. A specific implementation of "predefinition" is not limited in this application.

Fifth, "store" included in embodiments of this application may be storage in one or more storages. The one or more storages may be separately disposed, or may be integrated into an encoder or a decoder, a processor, or a communication apparatus. Alternatively, a part of the one or more storages may be separately disposed, and a part of the one or more storages are integrated into the decoder, the processor, or the communication apparatus. A type of the storage may be a storage medium in any form. This is not limited in this application.

Sixth, "protocols" in embodiments of this application may be standard protocols in the communication field, for example, may include a 5G protocol, a new radio (new radio, NR) protocol, and a related protocol used for a future communication system. This is not limited in this application.

Seventh, dashed boxes in flowcharts of the methods in the accompanying drawings of the specification of this application represents optional steps.

The following describes in detail the communication methods provided in embodiments of this application by using exchange between network elements as an example. It should be understood that the terms and the steps in embodiments of this application may be mutually referenced.

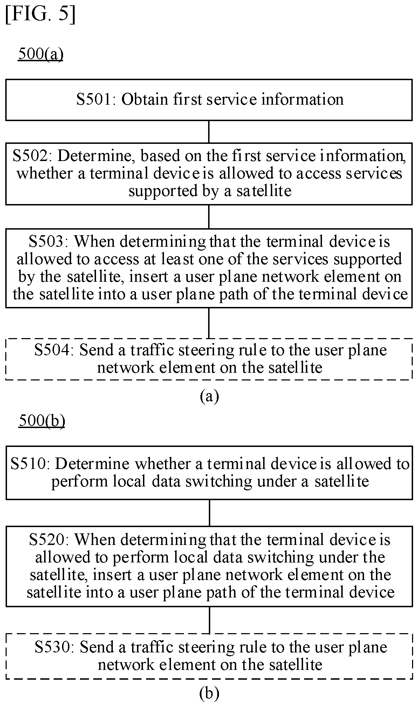

(a) in FIG. 5 is a schematic block diagram of a method 500(a) according to an embodiment of this application. It should be understood that the method 500(a) may be performed by a session management network element, or may be performed by a component (for example, a chip or a circuit) configured in a session management network element. This is not limited in this application. For convenience, the following uses an example in which the session management network element performs the method 500(a) for description.

S501: The session management network element obtains service information.

For example, the service information indicates one or more services supported by a satellite. In other words, the service information includes information about the services supported by the satellite. The service may be represented by a service identifier. The service identifier may be represented by at least one of the following: an application identifier (application identifier, App ID), a fully qualified domain name (fully qualified domain name, FQDN), an internet protocol (internet protocol, IP) quintuplet, an IP triplet, and a data network name (data network name, DNN), single network slice selection assistance information (single network slice selection assistance information S-NSSAI), and the like. In a specific example, the service information may be described as one or more FQDNs supported by the satellite. In another specific example, the service information may be described as one or more APP IDs supported by the satellite. In still another specific example, the service information may be described as one or more (DNNs and S-NSSAI) supported by the satellite.

The satellite herein may be a satellite accessed by a terminal device. In other words, the terminal device accesses the satellite in a satellite backhaul manner.

The following describes a specific implementation in which the session management network element obtains the service information by using an example. In an implementation, the session management network element determines a first data network access identifier based on location information of the terminal device and satellite backhaul type information corresponding to the terminal device. In other words, the session management network element determines a first data network access identifier corresponding to location information of the terminal device and satellite backhaul type information. In other words, the session management network element determines, based on location information of the terminal device, a first data network access identifier of a terminal device that accesses a core network by using satellite backhaul. For example, the session management network element determines one or more second data network access identifiers based on the location information of the terminal device. Then, the session management network element determines the first data network access identifier from the one or more second data network access identifiers based on the satellite backhaul type information corresponding to the terminal device. The first data network access identifier corresponds to the satellite. In other words, the session management network element may determine a plurality of second data network access identifiers based on the location information of the terminal device. Then, the session management network element may determine the first data network access identifier from the plurality of second data network access identifiers based on the satellite backhaul type information of the terminal device. The satellite backhaul type information indicates a satellite backhaul type used by the terminal device to access the satellite. For example, the satellite backhaul type information indicates the terminal device to access the satellite by using geostationary earth orbit satellite backhaul. It should be understood that the session management network element may obtain the location information of the terminal device and the satellite backhaul type information corresponding to the terminal device from a mobility management network element. For example, the session management network element receives a session management context creation request message from the mobility management network element. The session management context creation request message includes identification information of the terminal device, the location information of the terminal device, and the satellite backhaul type information corresponding to the terminal device. The session management network element obtains the location information of the terminal device and the satellite backhaul type information corresponding to the terminal device from the session management context creation request message.

Further, the session management network element determines the service information based on the first data network access identifier and first configuration information. The first configuration information includes a correspondence between the first data network access identifier and the service information.

It should be understood that the session management network element pre-stores the first configuration information before S501. For example, before the foregoing solution, the session management network element receives the first configuration information from an application function network element and then stores the first configuration information.

Optionally, in this implementation, the session management network element may further need another factor to determine the first data network access identifier. For example, the session management network element determines the first data network access identifier based on the location information of the terminal device, the satellite backhaul type information corresponding to the terminal device, and constellation information of the satellite. For another example, the session management network element determines the first data network access identifier based on the location information of the terminal device, the satellite backhaul type information corresponding to the terminal device, and identification information of the satellite. It should be noted herein that, when the terminal device has a plurality of backhaul links, there may be a plurality of data network access identifiers corresponding to the location information of the terminal device and the satellite backhaul type information of the terminal device. In this case, with reference to the constellation information of the satellite or the identification information of the satellite, a data network access identifier corresponding to the satellite may be determined.

It should be understood that, in this example, the constellation information of the satellite may be determined by the session management network element. Alternatively, after determining the constellation information of the satellite, the mobility management network element may send the constellation information of the satellite to the session management network element. This is not limited in this application. For example, when an access network device accesses different constellations by using different identification information, the session management network element may determine the constellation information of the satellite based on identification information of the access network device corresponding to the terminal device. The identification information of the access network device may be transport layer identification information of the access network device, or may be an identifier of the access network device. For another example, when different constellations use different frequency bands, the session management network element may determine the constellation information of the satellite based on a frequency used by the satellite. Alternatively, after determining the constellation information by using the foregoing solutions, the mobility management network element may send the constellation information to the session management network element. This is not limited in this application.

Similarly, in the foregoing example, the session management network element may determine the identification information of the satellite. Alternatively, after determining the identification information of the satellite, the mobility management network element may send the identification information of the satellite to the session management network element. This is not limited in this application. For example, the session management network element may determine, based on the location information of the terminal device, identification information of the satellite corresponding to the location information of the terminal device. It should be understood that, in an implementation, the session management network element presets a correspondence between the location information of the terminal device and the identification information of the satellite. Alternatively, after determining the identification information by using the foregoing solutions, the mobility management network element may send the identification information to the session management network element. This is not limited in this application.

In another implementation, the session management network element obtains the identification information of the satellite and then determines the service information based on the identification information of the satellite and second configuration information. The second configuration information includes a correspondence between the identification information of the satellite and the service information.

It should be understood that, in this implementation, the session management network element may determine the identification information of the satellite. Alternatively, after determining the identification information of the satellite, the mobility management network element may send the identification information of the satellite to the session management network element. This is not limited in this application. For a specific implementation, refer to the foregoing example.

In still another implementation, the session management network element obtains the constellation information of the satellite and then determines the service information based on the constellation information of the satellite and third configuration information. The third configuration information includes a correspondence between the constellation information of the satellite and the service information. For example, in a scenario, when any satellite in a constellation corresponds to a same service, the session management network element may determine, based on the constellation information of the satellite, the service information supported by the satellite.

It should be understood that, in this implementation, the session management network element may determine the constellation information of the satellite. Alternatively, after determining the identification information of the satellite, the mobility management network element may send the constellation information of the satellite to the session management network element. This is not limited in this application. For a specific implementation, refer to the foregoing example.

S502: The session management network element determines, based on the service information, whether the terminal device is allowed to access the services supported by the satellite.

For example, in an implementation, the session management network element receives subscription data of the terminal device from a data management network element, and then determines, based on the subscription data and the service information, whether the terminal device is allowed to access the services supported by the satellite. For example, the subscription data includes an identifier of a service that the terminal device is allowed to access. If the service that the terminal device is allowed to access includes at least one service indicated by the service information, the session management network element determines that the terminal device is allowed to access the services supported by the satellite.

Therefore, according to the foregoing solutions, that the session management network element determines, based on the service information, whether the terminal device is allowed to access the services supported by the satellite may include: The session management network element determines, based on the first data network access identifier, the first configuration information, and the subscription data of the terminal device, whether to insert a user plane network element on the satellite into a user plane path of the terminal device.

In another implementation, the session management network element receives policy information of the terminal device from a policy control network element, and then determines, based on the policy information and the service information, whether the terminal device is allowed to access the services supported by the satellite. For example, the policy information includes an identifier of a service that the terminal device is allowed to access. If the service that the terminal device is allowed to access includes at least one service indicated by the service information, the session management network element determines that the terminal device is allowed to access the services supported by the satellite.

Therefore, according to the foregoing solutions, that the session management network element determines, based on the service information, whether the terminal device is allowed to access the services supported by the satellite may include: The session management network element determines, based on the first data network access identifier, the first configuration information, and the policy information of the terminal device, whether to insert a user plane network element on the satellite into a user plane path of the terminal device.

S503: When determining that the terminal device is allowed to access at least one of the services supported by the satellite, the session management network element inserts the user plane network element on the satellite into the user plane path of the terminal device.

For example, in a case (denoted as a case 1), when determining that the terminal device is allowed to access the at least one of the services supported by the satellite, when determining that the service that the terminal device is allowed to access includes the at least one of the services supported by the satellite, or when determining that the service that the terminal device is allowed to access and the at least one of the services supported by the satellite overlap, the session management network element inserts the user plane network element on the satellite into the user plane path of the terminal device. The user plane network element on the satellite may serve as a branching point, may serve as a local anchor user plane network element, or may serve as a session anchor user plane network element. This is not limited in this application. When the user plane network element on the satellite serves as the local anchor user plane network element, session establishment of the terminal device is completed, and there are two user plane paths: terminal device-access network device-user plane network element on the satellite-service platform; and terminal device-access network device-user plane network element on the satellite-ground anchor user plane network element. When the user plane network element on the satellite serves as the session anchor user plane network element, session establishment of the terminal device is completed, and there is one user plane path: terminal device-access network device-user plane network element on the satellite-service platform. It should be understood that the session management network element inserting the user plane network element on the satellite into the user plane path of the terminal device may mean that the session management network element uses the user plane network element on the satellite inserted into the user plane path of the terminal device as the branching point and/or the local anchor session management network element, or may mean that the session management network element uses the user plane network element on the satellite as the session anchor user plane network element.

Further, if the user plane network element on the satellite serves as the branching point and/or the local anchor user plane network element, the session management network element selects a ground anchor user plane network element for a session of the terminal device. In other words, in the case 1, when determining that the terminal device is allowed to access the at least one of the services supported by the satellite, the session management network element inserts the user plane network element on the satellite into the user plane path of the terminal device, and then selects the ground anchor user plane network element for the session of the terminal device.

Optionally, in this case, S504 is further included. The session management network element sends a traffic steering rule to the user plane network element on the satellite.

For example, after inserting the user plane network element on the satellite into the user plane path of the terminal device, the session management network element sends the traffic steering rule (traffic steering rule) to the user plane network element on the satellite. The traffic steering rule may also be referred to as a data forwarding rule, a routing rule, or the like. This is not limited in this application. The traffic steering rule indicates the user plane network element on the satellite to directly send a data packet for a service on the satellite to a corresponding service platform. For example, the steering rule indicates the user plane network element on the satellite to directly send a data packet for an edge computing service on the satellite to a corresponding edge computing platform. Correspondingly, based on the traffic steering rule, after receiving the data packet for the edge computing service on the satellite, the user plane network element on the satellite directly sends the data packet to the corresponding service platform. The user plane network element on the satellite does not need to first send the data packet to a core network device on the ground, and then the core network device on the ground sends the data packet to the corresponding service platform. Therefore, a delay can be reduced and user experience can be improved.

In another case (denoted as a case 2), when determining that the terminal device is not allowed to access any one of the services supported by the satellite, when determining that the service that the terminal device is allowed to access does not include any one of the services supported by the satellite, or when determining that the service that the terminal device is allowed to access and any one of the services supported by the satellite do not overlap, the session management network element does not insert the user plane network element on the satellite into the user plane path of the terminal device.

Further, the session management network element selects a ground anchor user plane network element for a session of the terminal device. In other words, in the case 2, when determining that the terminal device is not allowed to access any one of the services supported by the satellite, the session management network element does not insert the user plane network element on the satellite into the user plane path of the terminal device, and directly selects the ground anchor user plane network element for the session of the terminal device.

It should be understood that the case 1 and the case 2 are two parallel solutions. In other words, the case 1 and the case 2 are two branches of a complete solution. In other words, for one terminal device, the case 1 and the case 2 may occur. Specifically, when determining that the terminal device is allowed to access the at least one of the services supported by the satellite, the session management network element performs a solution corresponding to the case 1. When determining that the terminal device is not allowed to access any one of the services supported by the satellite, the session management network element performs a solution corresponding to the case 2.

According to the foregoing solutions, when determining that the terminal device is allowed to access the at least one of the services supported by the satellite, the session management network element inserts the user plane network element on the satellite into the user plane path of the terminal device. When determining that the terminal device is not allowed to access any one of the services supported by the satellite, the session management network element does not insert the user plane network element on the satellite into the user plane path of the terminal device. In view of this, the user plane network element on the satellite may be inserted into the user plane path of the terminal device that needs the user plane network element on the satellite to provide a service, to support the terminal device in accessing the service on the satellite. The user plane network element on the satellite is not inserted into a user plane path of a terminal device that does not need the user plane network element on the satellite to provide a service. Therefore, a length of the user plane path of the terminal device can be shortened, a transmission delay can be reduced, and user experience can be improved.

(b) in FIG. 5 is a schematic block diagram of a method 500(b) according to an embodiment of this application. It should be understood that the method 500(b) may be performed by a session management network element, or may be performed by a component (for example, a chip or a circuit) configured in a session management network element. This is not limited in this application. For convenience, the following uses an example in which the session management network element performs the method 500(b) for description.

S510: The session management network element determines whether a terminal device is allowed to perform local data switching under a satellite.

In a possible implementation, the session management network element determines, based on subscription data or policy information of the terminal device, whether the terminal device is allowed to perform local data switching under the satellite. The subscription data or the policy information may include local data switching indication information. For example, the session management network element obtains the subscription data of the terminal device via a data management network element, and then determines, based on the local data switching indication information in the subscription data, whether the terminal device is allowed to perform local data switching under the satellite. The local data switching indication information indicates whether the terminal device is allowed to perform local data switching under the satellite. In a possible implementation, for the local data switching indication information, different values may be used for indicating different cases. For example, when a value of the local data switching indication information is 1, it indicates that the terminal device is allowed to perform local data switching under the satellite. When a value of the local data switching indication information is 0 (or null), it indicates that the terminal device is not allowed to perform local data switching under the satellite.

S520: When determining that the terminal device is allowed to perform local data switching under the satellite, the session management network element inserts a user plane network element on the satellite into a user plane path of the terminal device.

For example, in a case (denoted as a case a), when determining that the terminal device is allowed to access the local data switching under the satellite, or when determining that the terminal device supports the local data switching under the satellite, the session management network element inserts the user plane network element on the satellite into the user plane path of the terminal device. The user plane network element on the satellite may serve as a branching point, may serve as a local anchor user plane network element, or may serve as a session anchor user plane network element. This is not limited in this application.

Further, the session management network element selects a ground anchor user plane network element for a session of the terminal device. In other words, in the case a, when determining that the terminal device is allowed to perform local data switching under the satellite, the session management network element inserts the user plane network element on the satellite into the user plane path of the terminal device, and then selects the ground anchor user plane network element for the session of the terminal device.

Optionally, in this case, S530 is further included. The session management network element sends a traffic steering rule to the user plane network element on the satellite.

For example, after inserting the user plane network element on the satellite into the user plane path of the terminal device, the session management network element sends the traffic steering rule to the user plane network element on the satellite. The traffic steering rule indicates the user plane network element on the satellite to send, to a corresponding terminal device in a satellite local data switching manner, a data packet directed to a terminal device on the satellite. In other words, the traffic steering rule indicates the user plane network element on the satellite to send, to an access network device corresponding to the terminal device, a data packet whose destination address is directed to the terminal device on the satellite. In other words, the traffic steering rule indicates the user plane network element on the satellite to send, in a local data switching manner, a data packet that matches the terminal device on the satellite. Correspondingly, based on the traffic steering rule, when receiving a data packet directed to a specific terminal device connected to the satellite, the user plane network element on the satellite directly sends the data packet to a corresponding access network device. Therefore, a data transmission path can be shortened and user experience can be improved. In another case (denoted as a case b), when determining that the terminal device is not allowed to access the local data switching under the satellite, or when determining that the terminal device does not support the local data switching under the satellite, the session management network element does not insert the user plane network element on the satellite into the user plane path of the terminal device.

Further, the session management network element selects a ground anchor user plane network element for a session of the terminal device. In other words, in the case b, when determining that the terminal device is not allowed to perform local data switching under the satellite, the session management network element does not insert the user plane network element on the satellite into the user plane path of the terminal device, and directly selects the ground anchor user plane network element for the session of the terminal device.

It should be understood that the case a and the case b are two parallel solutions. In other words, for one terminal device, the case a and the case b may occur. Specifically, when determining that the terminal device is allowed to perform local data switching under the satellite, the session management network element performs a solution corresponding to the case a. When determining that the terminal device is not allowed to perform local data switching under the satellite, the session management network element performs a solution corresponding to the case b.

According to the foregoing solutions, when the terminal device needs to perform local data switching under the satellite, the user plane network element on the satellite may be inserted into the user plane path of the terminal device, to support the terminal device in performing local data switching under the satellite. When the terminal device does not need to perform local data switching under the satellite, the user plane network element on the satellite is not inserted into the user plane path of the terminal device. Therefore, a length of the user plane path of the terminal device can be shortened, a transmission delay can be reduced, and user experience can be improved.

The following describes the communication methods provided in embodiments of this application based on a 5G system. In an implementation, an SMF in a method 600 to a method 1000 may correspond to the session management network element in the method 500. An AMF in the method 600 to the method 1000 may correspond to the mobility management network element in the method 500. UE in the method 600 to the method 1000 may correspond to the terminal device in the method 500. A DNAI in the method 600 to the method 1000 may correspond to the data network access identifier in the method 500. The method 500 to the method 1000 may be applied to the network architecture shown in FIG. 1 or FIG. 2.

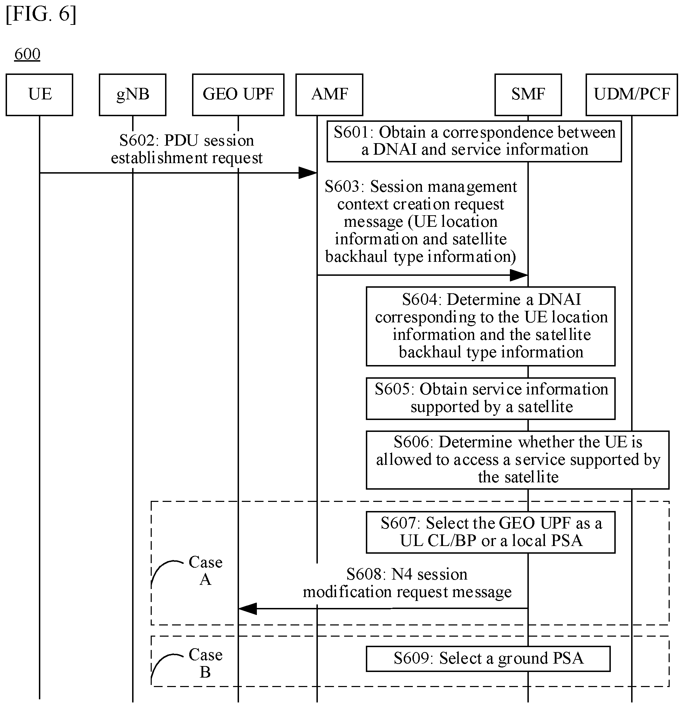

FIG. 6 is a flowchart of an example of a method 600 according to an embodiment of this application. The following describes the method 600 by using an example with reference to each step.

S601: An SMF obtains a correspondence between a DNAI and service information.

For example, the correspondence between the DNAI and the service information may be understood as service deployment information corresponding to a satellite. The service information indicates one or more services supported by the satellite. In an implementation, the service information may include FQDNs corresponding to different services. In other words, the correspondence between the DNAI and the service information herein may be a correspondence between the DNAI and one or more FQDNs. The DNAI identifies a user plane connection for accessing the services supported by the satellite. For example, in a satellite edge computing scenario, the service may be an EC service. In this case, the DNAI may be understood as location information of an EC platform, or may be understood as an identifier of a corresponding user plane connection for accessing the EC platform.

For ease of description, an example in which the satellite included in this embodiment of this application is a GEO satellite is used for description.

In an implementation, the SMF obtains the correspondence between the DNAI and the service information via an AF. For example, the AF sends an AF request message to the SMF via an NEF/a PCF. The AF request message includes the correspondence between the DNAI and the service information. After receiving the AF request message, the SMF locally stores the correspondence between the DNAI and the service information. In another implementation, the SMF obtains the correspondence between the DNAI and the service information by using local configuration information.

It should be understood that a specific occasion for performing S601 is not limited in this application, but S601 should be performed before S602.

S602: UE sends a PDU session establishment request to an AMF. Correspondingly, the AMF receives the PDU session establishment request from the UE.

For example, the UE sends the PDU session establishment request to the AMF by using a NAS message. Specifically, for example, the UE sends an AN message (AN message) to a gNB. The AN message carries the NAS message (NAS message). The NAS message includes a PDU session ID and the session establishment request (PDU Session Establishment request). After receiving the AN message from the UE, the gNB sends an N2 message (N2 message) to the AMF. The N2 message includes the PDU session ID, UE location information (UE location information, ULI), and the session establishment request. The UE location information identifies a current geographical location of the UE.

It should be understood that the PDU session establishment request may alternatively be replaced with a PDU session modification request, a PDU session release request, or the like. This is not limited in this application. In other words, the solution provided in this embodiment of this application may be applied to a PDU session establishment process of the UE, a PDU session modification process of the UE, or a PDU session release process of the UE.

S603: The AMF sends a session management context creation request message to the SMF. Correspondingly, the SMF receives the session management context creation request message from the AMF.

For example, after receiving the PDU session establishment request from the UE, the AMF sends the session management context creation request (Nsmf_PDUSession_CreateSMContext request) message to the SMF. The session management context creation request message includes the UE location information.

If determining that the UE accesses a network by using satellite backhaul (satellite backhaul, SATB), the AMF includes satellite backhaul type information in the session management context creation request message. The satellite backhaul type information indicates a backhaul type used by the UE to access a satellite. For example, the satellite backhaul type information indicates the UE to access the GEO satellite by using a GEO satellite backhaul type.

S604: The SMF determines a DNAI corresponding to the UE location information and the satellite backhaul type information.

For example, after obtaining the UE location information and the satellite backhaul type information from the session management context creation request message, the SMF determines the corresponding DNAI based on the UE location information and the satellite backhaul type information.

In a possible implementation, the SMF locally stores configuration information. The configuration information may be pre-configured for the SMF, or may be obtained by the SMF from another network element. The configuration information includes correspondences between the UE location information, the satellite backhaul type information, and the DNAI. The SMF determines the DNAI based on the obtained UE location information, satellite backhaul type information, and configuration information.

Optionally, the SMF determines the DNAI based on the UE location information, the satellite backhaul type information, and constellation information. For example, in a scenario, the UE location information may correspond to a plurality of constellations. In this case, the SMF needs to first obtain constellation information of the UE, and then determine the corresponding DNAI based on the UE location information, the satellite backhaul type information, and the constellation information. An implementation in which the SMF obtains the constellation information of the UE is not limited in this application. The following provides two possible examples. In one implementation, when the gNB accesses different constellations via different gNB IDs/gNB IPs, the SMF may determine constellation information of the satellite based on the gNB ID/gNB IP. In another implementation, different constellations use different frequency bands, and the SMF may determine constellation information of the satellite based on a frequency used by the satellite. It should be understood that, after determining the constellation information of the UE, the AMF may alternatively send the constellation information of the UE to the SMF. This is not limited in this application.

S605: The SMF obtains service information supported by the satellite.

For example, after determining the DNAI, the SMF determines, based on the DNAI and the correspondence that is between the DNAI and the service information and that is obtained in S601, the service information supported by the satellite.

S606: The SMF determines whether the UE is allowed to access the services supported by the satellite.

For example, the SMF may first determine, via UDM or the PCF, the service information that the UE is allowed to access.

For example, the SMF obtains subscription data of the UE via the UDM. The subscription data includes an identifier of the service that the UE is allowed to access. The subscription data may be session management subscription data (Session Management Subscription data). Specifically, for example, the SMF sends a subscription data request message to the UDM. The subscription data request message includes identification information of the UE. After receiving the subscription data request message from the SMF, the UDM retrieves the subscription data of the UE based on the identification information of the UE, and then sends a subscription data response message to the SMF. The subscription data response message includes the subscription data of the UE. The SMF obtains, from the subscription data of the UE, the identifier of the service that the UE is allowed to access.

For another example, the SMF obtains policy information for the UE via the PCF. The policy information includes an identifier of the service that the UE is allowed to access. Specifically, for example, the SMF sends a policy information request message to the PCF. The policy information request message includes identification information of the UE. After receiving the policy information request message from the SMF, the PCF sends a policy information response message to the SMF. The policy information response message includes the policy information for the UE. The SMF obtains, from the policy information for the UE, the identifier of the service that the UE is allowed to access.

It should be noted that, in the foregoing example, the subscription data or the policy information obtained by the SMF may include an identifier of a service that the UE is not allowed to access. In this case, the SMF may determine, based on the identifier of the service that the UE is not allowed to access, the identifier of the service that the UE is allowed to access.

It should be understood that the service that the UE is allowed to access may also be referred to as a service that the UE has permission to access, referred to as a service that the UE subscribes to, referred to as a service that may be used by the UE, or referred to as a service that the UE supports. This is not limited in this application.

Further, the SMF determines, based on the identifier of the service that the UE is allowed to access and the service information supported by the satellite, whether the UE is allowed to access the services supported by the satellite.

When at least one of identifiers of the service that the UE is allowed to access matches the service information supported by the satellite, or when the service information supported by the satellite includes at least one of the identifiers of the service that the UE is allowed to access, the SMF determines that the UE is allowed to access the at least one of the services supported by the satellite. In this case, the session management network element inserts a UPF on the satellite (denoted as GEO UPF) into a user plane path of the UE.

When any one of the identifiers of the service that the UE is allowed to access does not match the service information supported by the satellite, or when the service information supported by the satellite does not include any one of the identifiers of the service that the UE is allowed to access, the SMF determines that the UE is not allowed to access any one of the services supported by the satellite. In this case, the session management network element does not insert a GEO UPF into a user plane path of the UE.

The following separately describes the two cases by using examples.

### Case A:

S607: The SMF selects the GEO UPF as an UL CL/BP. The GEO UPF is a GEO UPF corresponding to the DNAI in step S604. It may alternatively be described as follows: The GEO UPF is a GEO UPF corresponding to a satellite backhaul network used by the UE.

S608: The SMF sends an N4 session establishment or modification request message to the GEO UPF.

For example, when determining that the UE is allowed to access the at least one of the services supported by the satellite, the SMF selects the GEO UPF as the UL CL/BP, and then sends the N4 session modification request message to the GEO UPF. The N4 session modification request message includes a traffic steering rule. The traffic steering rule indicates the GEO UPF to directly send a data packet for a service on the GEO satellite to an edge computing platform. In other words, the traffic steering rule indicates to distribute the service that the UE is allowed to access and that is also supported by the satellite to a satellite edge computing platform (SAT EC). Alternatively, the SMF may indicate, by using the N4 session modification request message, the GEO UPF to serve as a local PSA.

Further, the SMF selects a ground PSA. Then, establishment of a PDU session is completed on a network side.

Based on this, two user plane paths may be established: UE-RAN-GEO UPF-SAT EC; and UE-RAN-GEO UPF-ground PSA.

In other words, when the UE is allowed to access the at least one of the services supported by the satellite, the SMF first selects the GEO UPF as the UL CL/BP or the local PSA, and then selects the ground PSA.

The case A may also be described as that the SMF selects the GEO UPF as a session anchor UPF. In other words, when the UE is allowed to access the at least one of the services supported by the satellite, the SMF selects the GEO UPF as the session anchor UPF.

### Case B:

S609: The SMF selects a ground PSA.

For example, after determining not to insert a UPF corresponding to the DNAI as a branching point, the SMF does not select the GEO UPF corresponding to the DNAI, but directly selects the ground PSA. Then, establishment of a PDU session is completed on a network side.

Based on this, one user plane path: UE-RAN-ground PSA may be established.

In other words, when not the UE is allowed to access any one of the services supported by the satellite, the SMF does not select the GEO UPF, but directly selects the ground PSA.

In the foregoing solution, whether to insert the UPF on the satellite into the user plane path of UE is determined based on whether the UE is allowed to access the service on the satellite. Therefore, a delay can be reduced and user experience can be improved.

In one aspect, in the solution in this embodiment of this application, the UPF on the satellite may be pre-inserted into the user plane path of the UE. In this case, when the UE initiates a specific service on the satellite, the UPF on the satellite may directly provide support. For example, the UPF on the satellite is pre-inserted as the branching point. When the UE initiates the EC service on the satellite, the UPF on the satellite may directly distribute a packet to the EC platform on the satellite. Compared with a manner of dynamically inserting the UPF on the satellite, in this solution, the delay can be reduced. Specifically, when the UE initiates a service, the SMF determines, based on a service to be accessed by the UE, whether to insert the UPF on the satellite into the user plane path of the UE. When the UPF on the satellite needs to be inserted, the SMF selects the UPF on the satellite and delivers a corresponding policy to the UPF. Because exchange between the SMF and the UPF on the satellite is satellite-ground exchange, a delay is long. Consequently, time for establishing the user plane connection is long, and the delay is excessively long. In comparison, in the solution provided in this embodiment of this application, the UPF on the satellite is pre-inserted, so that duration of establishing the user plane connection can be shortened, and user experience can be improved.

In addition, according to the solution in this embodiment of this application, the UPF on the satellite is not inserted into the user plane path of the UE that cannot access the service on the satellite. Compared with the solution in which the SMF inserts the UPF on the satellite into the user plane path, this solution can shorten a length of a user plane path of a part of UEs (that is, UEs that do not support access to the service on the satellite), reduce a data transmission delay and improve user experience. For example, in the session establishment process of the UE, the SMF uniformly pre-inserts the UPF on the satellite into the user plane path of the UE. If the UE is not allowed to access any service on the satellite, it is unnecessary to pre-insert the UPF on the satellite into the user plane path of the UE. In this case, one more UPF is generated on a path between a base station and the ground PSA. Consequently, a packet processing process is increased, a packet transmission delay is increased, and user experience is affected. In comparison, in this solution provided in this embodiment of this application, when the UE is allowed to access the at least one service on the satellite, the UPF on the satellite is inserted into the user plane path of the UE. When the UE is not allowed to access any service on the satellite, the UPF on the satellite is not inserted into the user plane path of the UE. This does not affect the service of the UE and reduces the data transmission delay, so that user experience can be improved.

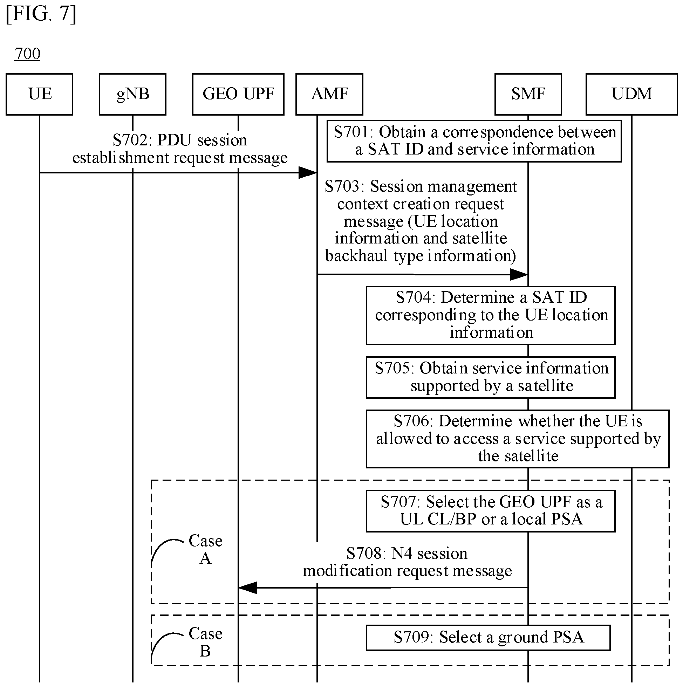

FIG. 7 is a flowchart of an example of a method 700 according to an embodiment of this application. The following describes the method 700 by using an example with reference to each step.

S701: An SMF obtains a correspondence between a SAT ID and service information.

For example, the correspondence between the SAT ID and the service information may be understood as service deployment information corresponding to a satellite. The service information indicates one or more services supported by the satellite. For description of the service information, refer to S601 in the method 600. Details are not described herein again. The SAT ID identifies the satellite. The SAT ID may be identification information of the satellite, or may be the UPF on the satellite identification information (SAT UPF ID). This is not limited in this application.

In an implementation, the SMF may obtain the correspondence between the SAT ID and the service information by using an AF. In another implementation, the SMF may obtain the correspondence between the SAT ID and the service information by using local configuration information.

S702: UE sends a PDU session request message to an AMF. Correspondingly, the AMF receives the PDU session request message from the UE.

S703: The AMF sends a session management context creation request message to the SMF. Correspondingly, the SMF receives the session management context creation request message from the AMF.

It should be understood that S702 and S703 are similar to S602 and S603 in the method 600. For brevity, details are not described herein again.

S704: The SMF determines a SAT ID corresponding to UE location information.

For example, the SMF obtains the UE location information from the session management context creation request message, and then determines the corresponding SAT ID based on the UE location information.

In a possible implementation, the SMF locally stores configuration information. The configuration information may be pre-configured for the SMF, or may be obtained from another network element. The configuration information includes a correspondence between the UE location information and the SAT ID. The SMF determines the SAT ID based on the UE location information and the configuration information that are obtained.

S705: The SMF determines the service information corresponding to the SAT ID.

For example, after determining the SAT ID, the SMF determines, based on the SAT ID and the correspondence that is between the SAT ID and the service information and that is obtained in S701, service information supported by the satellite.

S706: The SMF determines whether the UE is allowed to access a service supported by the satellite.

It should be understood that S706 is similar to S606 in the method 600. For brevity, details are not described herein again. S707 to S709 in FIG. 7 are similar to S608 to S610 in the method 600. Details are not described herein again.

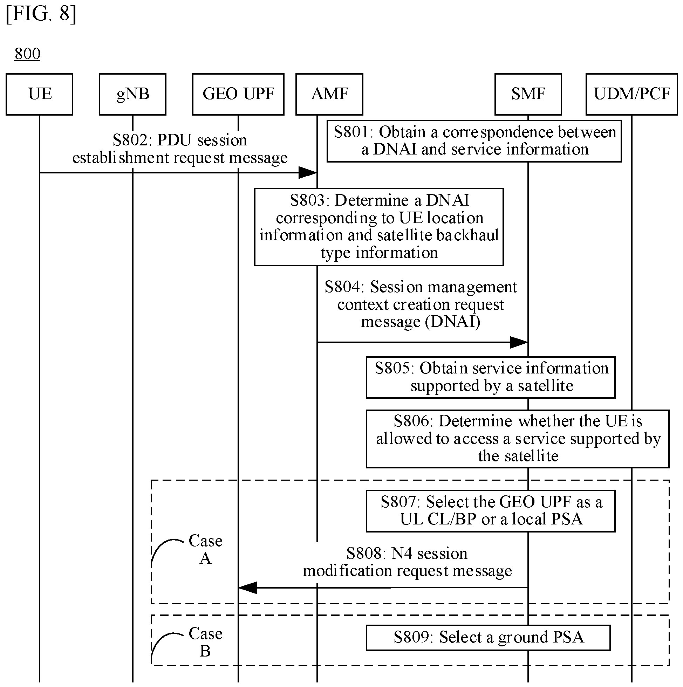

FIG. 8 is a flowchart of an example of a method 800 according to an embodiment of this application. The following describes the method 800 by using an example with reference to each step.

S801: An SMF obtains a correspondence between a DNAI and service information.

S802: UE sends a PDU session establishment request message to an AMF. Correspondingly, the AMF receives the PDU session establishment request message from the UE.

S801 and S802 are similar to S601 and S602 in the method 600. For brevity, details are not described herein again.

S803: The AMF determines a DNAI corresponding to UE location information and satellite backhaul type information.

For example, after obtaining the UE location information and the satellite backhaul type information, the AMF determines the corresponding DNAI based on the UE location information and the satellite backhaul type information.

In a possible implementation, the AMF locally stores configuration information. The configuration information may be pre-configured for the AMF, or may be obtained from another network element. The configuration information includes correspondences between the UE location information, the satellite backhaul type information, and the DNAI. The AMF determines the DNAI based on the UE location information, the satellite backhaul type information, and the configuration information.

For a specific implementation, refer to S604 in the method 600. A difference lies in that S604 in the method 600 is performed by the SMF, and S803 in the method 800 is performed by the SMF.

S804: The AMF sends a session management context creation request message to the SMF. Correspondingly, the SMF receives the session management context creation request message from the AMF.

For example, after determining the DNAI corresponding to the UE location information and the satellite backhaul type information, the AMF sends the session management context creation request message to the SMF. The session management context creation request message includes the DNAI.

S805: The SMF obtains service information supported by the satellite.

S806: The SMF determines whether the UE is allowed to access a service supported by the satellite.

It should be understood that S805 and S806 are similar to S605 and S606 in the method 600. Details are not described herein again. In addition, S807 to S809 are similar to S607 to S609 in the method 600. Details are not described herein again.

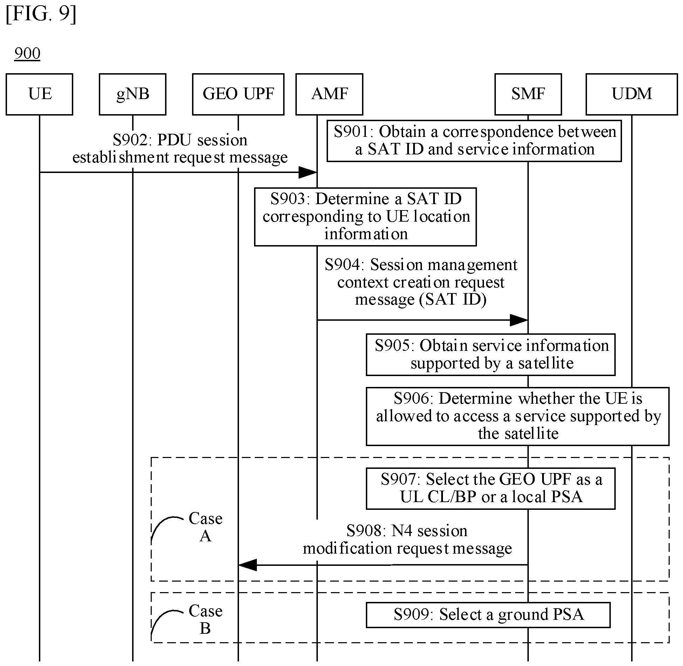

FIG. 9 is a flowchart of an example of a method 900 according to an embodiment of this application. The following describes the method 900 by using an example with reference to each step.

S901: An SMF obtains a correspondence between a SAT ID and service information.

S902: UE sends a PDU session establishment request message to an AMF. Correspondingly, the AMF receives the PDU session establishment request message from the UE.

It should be understood that S901 and S902 are similar to S701 and S702 in the method 700. Details are not described herein again.

S903: The AMF determines a SAT ID corresponding to UE location information.

For example, after receiving the PDU session establishment request message from the UE, the AMF determines the UE location information, and then determines, based on the UE location information, the SAT ID corresponding to the UE location information.

In a possible implementation, the AMF locally stores configuration information. The configuration information may be pre-configured for the SMF, or may be obtained from another network element. The configuration information includes a correspondence between the UE location information and the SAT ID. The AMF determines the SAT ID based on the UE location information and the configuration information.

For a specific implementation, refer to S704 in the method 700. A difference lies in that S704 in the method 700 is performed by the SMF, and S903 in the method 900 is performed by the AMF.

S904: The AMF sends a session management context creation request message to the SMF. Correspondingly, the SMF receives the session management context creation request message from the AMF.

For example, after receiving the PDU session establishment request from the UE, the AMF sends the session management context creation request message to the SMF. The session management context creation request message includes the SAT ID.

S905: The SMF obtains service information supported by a satellite.

S906: The SMF determines whether the UE is allowed to access a service supported by the satellite.

It should be understood that S905 and S906 are similar to S605 and S606 in the method 600. Details are not described herein again. In addition, S907 to S909 are similar to S607 to S609 in the method 600. Details are not described herein again either.

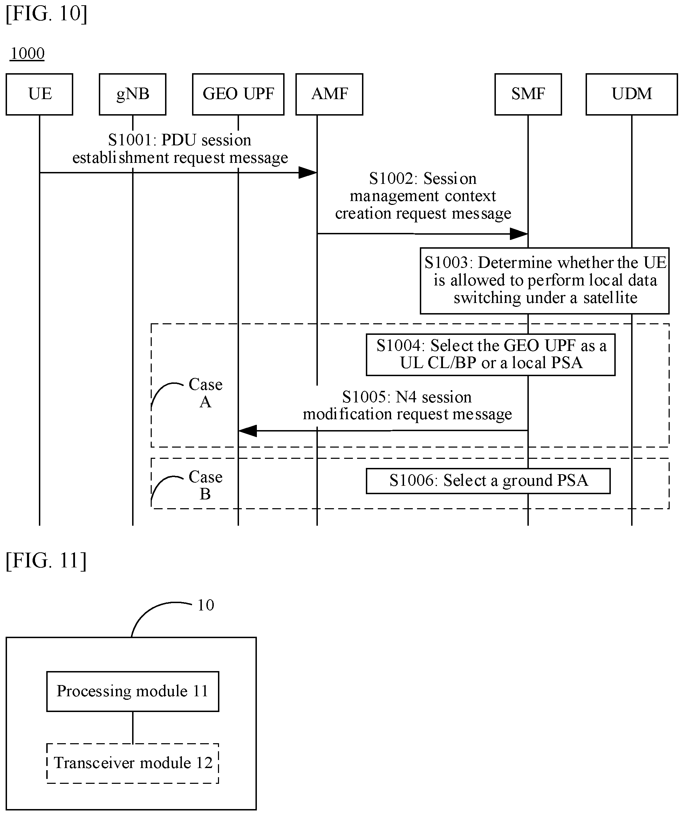

FIG. 10 is a flowchart of an example of a method 1100 according to an embodiment of this application. The following describes the method 1100 by using an example with reference to each step.

S1001: UE sends a PDU session establishment request message to an AMF, and correspondingly, the AMF receives the PDU session establishment request message from the UE.

S 1002: The AMF sends a session management context creation request message to an SMF. Correspondingly, the SMF receives the session management context creation request message from the AMF.

It should be understood that S1001 and S1002 are similar to S602 and S603 in the method 600. Details are not described herein again.

S1003: The SMF determines whether the UE is allowed to perform local data switching under a satellite.

For example, the SMF may determine, based on subscription data of the UE or policy information of the UE, whether the UE is allowed to perform local data switching under the satellite. The subscription data or the policy information may include local data switching indication information. For example, the SMF obtains the subscription data of the UE via UDM, and then determines, based on local data switching indication information in the subscription data, whether the UE is allowed to perform local data switching under the satellite. The local data switching indication information indicates whether the UE is allowed to perform local data switching under the satellite. In a possible implementation, for the local data switching indication information, different values may be used for indicating different cases. For example, when a value of the local data switching indication information is 1, it indicates that the UE is allowed to perform local data switching under the satellite. When a value of the local data switching indication information is 0 (or null), it indicates that the UE is not allowed to perform local data switching under the satellite.

When the UE is allowed to perform local data switching under the satellite, the session management network element inserts a UPF on the satellite (denoted as a GEO UPF) into a user plane path of the UE.

When the UE is not allowed to perform local data switching under the satellite, the session management network element does not insert a UPF on the satellite (denoted as a GEO UPF) into a user plane path of the UE.

The following separately describes the two cases by using examples.

### Case A:

S1004: The SMF selects the GEO UPF as an UL CL/BP or a local PSA.

S1005: The SMF sends an N4 session establishment or modification request message to the GEO UPF.

For example, when determining that the UE is allowed to perform local data switching under the satellite, the SMF selects the GEO UPF, and then sends the N4 session modification request message to the GEO UPF. The N4 session modification request message includes a traffic steering rule. The traffic steering rule indicates the GEO UPF to send, in a satellite local data switching manner, a data packet directed to the UE on the satellite to corresponding UE. In other words, the traffic steering rule indicates the GEO UPF to send, to a gNB corresponding to the UE, a data packet whose destination address is directed to the UE on the satellite. In other words, the traffic steering rule indicates the GEO UPF to send, in the local data switching manner, a data packet that matches the UE on the satellite.

### Case B:

S1006: The SMF selects a ground PSA.

S1006 is similar to S609. Details are not described herein again.

According to the foregoing solutions, when the UE needs to perform local data switching under the satellite, the GEO UPF may be inserted into the user plane path of the terminal device, to support the UE in performing local data switching under the satellite. When the UE does not need to perform local data switching under the satellite, the GEO UPF is not inserted into the user plane path of the terminal device. Therefore, a length of the user plane path of the UE can be shortened, a transmission delay can be reduced, and user experience can be improved.

It should be understood that the method 100 may be implemented independently, or may be implemented in combination with the method 600 to the method 900. For example, when the method 1100 is implemented in combination with the method 600, the SMF may comprehensively consider cases provided in S605 and S1003, and determine whether to insert a UPF on a satellite. Specifically, the SMF determines whether the UE is allowed to access a service supported by the satellite, and whether the UE is allowed to perform local data switching under the satellite. When the UE is allowed to access at least one of the services supported by the satellite, or when the UE is allowed to perform local data switching under the satellite, the SMF inserts the UPF on the satellite. When the UE is not allowed to access at least one of the services supported by the satellite, or when the UE is not allowed to perform local data switching under the satellite, the SMF does not insert the UPF on the satellite.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments. Therefore, for content not described in detail, refer to the foregoing method embodiments. For brevity, details are not described herein again.

FIG. 11 is a schematic block diagram of a communication apparatus 10 according to an embodiment of this application. The apparatus 10 includes a processing module 11. Optionally, the apparatus 10 may further include a transceiver module 11. The processing module 11 is configured to perform data processing, and the transceiver module 12 may implement a corresponding communication function. In other words, the transceiver module 12 is configured to perform operations related to receiving and sending, and the processing module 11 is configured to perform an operation other than the operations related to receiving and sending. The transceiver module 12 may also be referred to as a communication interface or a communication unit.

Optionally, the apparatus 10 may further include a storage module (which is not shown in the figure). The storage module may be configured to store instructions and/or data, and the processing module 11 may read the instructions and/or the data in the storage module, so that the apparatus implements actions of the device or the network element in the foregoing method embodiments.

In a first design, the apparatus 10 may correspond to the network device in the foregoing method embodiments, or may be a component (for example, the chip) of the network device, for example, the session management network element (for example, the SMF) or the mobility management network element (for example, the AMF).

The apparatus 10 may implement steps or procedures performed by the session management network element (for example, the SMF) in the foregoing method embodiments. The processing module 11 may be configured to perform operations related to processing of the application session management network element (for example, the SMF) in the foregoing method embodiments. The transceiver module 12 may be configured to perform operations related to sending and receiving of the session management network element (for example, the SMF) in the foregoing method embodiments.

For example, the apparatus 10 may correspond to the session management network element in the method 500 or the SMF in the method 600 to the method 1000 in embodiments of this application. The apparatus 10 may include modules configured to perform the methods performed by the session management network element (or the SMF) in FIG. 5 to FIG. 10. In addition, modules in the apparatus 10 and the foregoing other operations and/or functions are separately used for implementing corresponding procedures of the methods shown in FIG. 5 to FIG. 10.

In a possible design, the processing module 11 is configured to obtain service information, where the service information indicates one or more services supported by a satellite; determine, based on the service information, whether a terminal device is allowed to access the services supported by the satellite; and when determining that the terminal device is allowed to access at least one of the services supported by the satellite, insert a user plane network element on the satellite into a user plane path of the terminal device.

The apparatus 10 may implement steps or procedures performed by the mobility management network element (or the AMF) in the foregoing method embodiments. The transceiver module 12 may be configured to perform operations related to sending and receiving of the mobility management network element (or the AMF) in the foregoing method embodiments. The processing module 11 may be configured to perform operations related to processing of the application mobility management network element (or the AMF) in the foregoing method embodiments.

For example, the apparatus 10 may correspond to the mobility management network element in the method 500 or the AMF in the method 600 to the method 1000 in embodiments of this application. The apparatus 10 may include modules configured to perform the methods performed by the mobility management network element (or the AMF) in FIG. 5 to FIG. 10. In addition, modules in the apparatus 10 and the foregoing other operations and/or functions are separately used for implementing corresponding procedures of the methods shown in FIG. 5 to FIG. 10.

In a possible implementation, the processing module 11 is configured to determine a first data network access identifier based on location information of the terminal device and satellite backhaul type information corresponding to the terminal device. The transceiver module 12 is configured to send the first data network access identifier to a session management network element.

It should be understood that specific processes in which the modules perform the foregoing corresponding steps are described in detail in the foregoing method embodiments. For brevity, details are not described herein again.

It should be further understood that the apparatus 10 herein is presented in a form of a functional module. The term "module" herein may be an application-specific integrated circuit (application specific integrated circuit, ASIC), an electronic circuit, a processor (for example, a shared processor, a dedicated processor, or a group processor) configured to execute one or more software or firmware programs, a storage, a combinational logic circuit, and/or another appropriate component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by the network device (for example, the mobility management network element or the data management network element) or the terminal device in the foregoing methods. The function may be implemented by hardware, or may be implemented by hardware executing corresponding software. The hardware or the software includes one or more modules corresponding to the function. For example, the transceiver module may be replaced with a transceiver machine (for example, a sending unit in the transceiver module may be replaced with a transmitter, and a receiving unit in the transceiver module may be replaced with a receiver), and another unit, for example, the processing module, or the like may be replaced with a processor, to separately perform sending and receiving operations and a related processing operation in the method embodiments.

In addition, the transceiver module 12 may be a transceiver circuit (for example, may include a receiving circuit and a sending circuit), and the processing module may be a processing circuit.

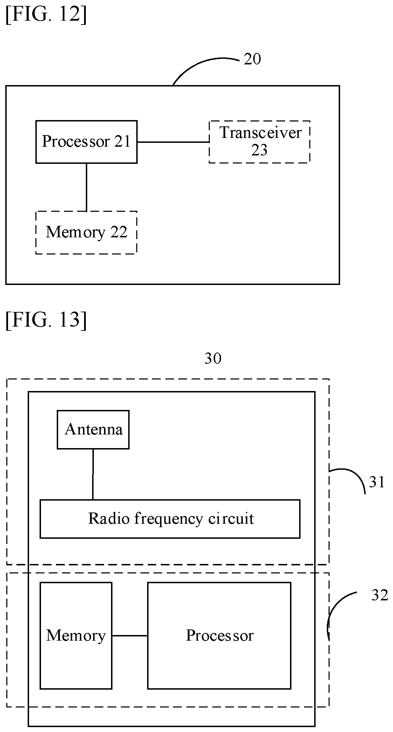

It should be noted that an apparatus in FIG. 12 may be the network element or the device in the foregoing embodiments, or may be a chip or a chip system, for example, a system on chip (system on chip, SoC). The transceiver module may be an input/output circuit or the communication interface. The processing module is a processor, a microprocessor, or an integrated circuit integrated on the chip. This is not limited herein.

According to the foregoing method, FIG. 12 is a schematic diagram of a communication apparatus 20 according to an embodiment of this application. In a possible design, the apparatus 20 may correspond to the session management network element (or the SMF) in the foregoing method embodiments. In another possible design, the apparatus 10 may correspond to the mobility management network element (or the AMF) in the foregoing method embodiments.

The apparatus 20 may include a processor 21 (that is, an example of a processing module). The processor 21 is configured to perform operations performed by the session management network element (for example, the SMF) or the mobility management network element (for example, the AMF) in the methods corresponding to FIG. 5 to FIG. 10. Optionally, the apparatus 20 may include a storage 22. The processor 21 may execute instructions stored in the storage 22, so that the apparatus 20 implements the operations performed by the session management network element (for example, the SMF) or the mobility management network element (for example, the AMF) in the methods corresponding to FIG. 5 to FIG. 10.

Further, the apparatus 20 may further include a transceiver 23 (that is, an example of a transceiver module). Further, the processor 21, the storage 22, and the transceiver 23 may communicate with each other through an internal connection path, to transfer a control signal and/or a data signal. The storage 22 is configured to store a computer program. The processor 21 may be configured to invoke the computer program from the storage 22 and run the computer program, to control the transceiver 23 to receive a signal and control the transceiver 23 to send a signal, so that steps performed by the terminal device or the network device in the foregoing methods are completed. The storage 22 may be integrated into the processor 21, or may be disposed separately from the processor 21.

Optionally, if the communication apparatus 20 is a communication device, the transceiver 23 may include an input port and an output port, in other words, the transceiver 23 may be divided into a receiver and a transmitter. The receiver and the transmitter may be a same physical entity or different physical entities. When the receiver and the transmitter are the same physical entity, the receiver and the transmitter may be collectively referred to as a transceiver.

Optionally, if the communication apparatus 20 is a chip or a circuit, the input port is an input interface, and the output port is an output interface.

In an implementation, it may be considered that a function of the transceiver 23 is implemented by using a transceiver circuit or a dedicated transceiver chip. It may be considered that the processor 21 is implemented by using a dedicated processing chip, a processing circuit, a processor, or a general-purpose chip.

In another implementation, it may be considered that the communication device provided in this embodiment of this application is implemented by using a general-purpose computer. To be specific, a program code for implementing functions of the processor 21 and the transceiver 23 is stored in the storage 22. A general-purpose processor implements the functions of the processor 21 and the transceiver 23 by executing the code in the storage 22.

For concepts, explanations, detailed descriptions, and other steps of the apparatus 20 that are related to the technical solutions provided in embodiments of this application, refer to descriptions of the content in the foregoing methods or other embodiments. Details are not described herein.

FIG. 13 is a simplified schematic diagram of a structure of a network device 30. The network device includes a part 31 and a part 32. The part 31 is mainly configured to send and receive a radio frequency signal and perform conversion between the radio frequency signal and a baseband signal. The part 32 is mainly configured to process a baseband, control the network device, and the like. The part 31 may be usually referred to as a transceiver module, a transceiver machine, a transceiver circuit, a transceiver, or the like. The part 32 is usually a control center of the network device, and may be usually referred to as a processing module, and is configured to control the network device to perform processing operations on the network device side in the foregoing method embodiments.

The transceiver module of the part 31 may also be referred to as the transceiver machine, the transceiver, or the like. The transceiver module includes an antenna and a radio frequency circuit, where the radio frequency circuit is mainly configured to perform radio frequency processing. For example, a component configured to implement a receiving function in the part 31 may be considered as a receiving module, and a component configured to implement a sending function may be considered as a sending module. In other words, the part 31 includes the receiving module and the sending module. The receiving module may also be referred to as a receiving machine, a receiver, or a receiving circuit, and the sending module may also be referred to as a transmitting machine, a transmitter, or a transmitting circuit.

The part 32 may include one or more boards, and each board may include one or more processors and one or more storages. The processor is configured to read and execute a program in the storage to implement a baseband processing function and control the network device. If there are a plurality of boards, the boards may be interconnected with each other, to enhance a processing capability. In an optional implementation, a plurality of boards may share one or more processors, a plurality of boards may share one or more storages, or a plurality of boards may simultaneously share one or more processors.

For example, in an implementation, the network device shown in FIG. 13 may be any network device, for example, the mobility management network element, in the methods shown in FIG. 5 to FIG. 10.

The transceiver module of the part 31 is configured to perform steps related to sending and receiving of any network device in the methods shown in FIG. 5 to FIG. 10. The part 32 is configured to perform steps related to processing of any network device in the methods shown in FIG. 5 to FIG. 10.

It should be understood that FIG. 10 is merely an example, but not a limitation. The network device including the transceiver module and the processing module may not depend on the structure shown in FIG. 10.

When the apparatus 30 is a chip, the chip includes the transceiver module and the processing module. The transceiver module may be an input/output circuit or a communication interface. The processing module is a processor, a microprocessor, or an integrated circuit integrated on the chip.

An embodiment of this application further provides a computer-readable storage medium. The computer-readable storage medium stores computer instructions used for implementing the method performed by the network device in the foregoing method embodiments.

For example, when a computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the first device or the method performed by the second device in the foregoing method embodiments.

An embodiment of this application further provides a communication system. The communication system includes the network device in the foregoing embodiments.

For explanations and beneficial effects of related content of any apparatus provided above, refer to the corresponding method embodiment provided above. Details are not described herein again.

In embodiments of this application, the network device may include a hardware layer, an operating system layer running above the hardware layer, and an application layer running above the operating system layer. The hardware layer may include hardware, for example, a central processing unit (central processing unit, CPU), a memory management unit (memory management unit, MMU), and a memory (which is also referred to as a main storage). An operating system at the operating system layer may be any one or more computer operating systems that implement service processing through a process (process), for example, a Linux operating system, a Unix operating system, an Android operating system, an iOS operating system, or a Windows operating system. The application layer may include applications, for example, a browser, an address book, word processing software, and instant messaging software.

A specific structure of an execution body of the method provided in embodiments of this application is not particularly limited in embodiments of this application, provided that a program that records code for the method provided in embodiments of this application can be run to perform communication according to the method provided in embodiments of this application. For example, the method provided in embodiments of this application may be performed by the network device, or may be performed by the functional module that can invoke the program and execute the program in the network device.

Aspects or features of this application may be implemented as a method, an apparatus, or a product that uses standard programming and/or engineering technologies. The term "product" used in this specification may cover a computer program that can be accessed from any computer-readable component, carrier, or medium. For example, the computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable medium" may include but is not limited to a radio channel and various other media that can store, include, and/or carry instructions and/or data.

It should be understood that the processor in embodiments of this application may be a central processing unit (central processing unit, CPU), another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is the general-purpose processor, the DSP, the ASIC, the FPGA or the another programmable logic device, the discrete gate or the transistor logic device, or the discrete hardware component, the storage (storage module) may be integrated into the processor.

It should further be noted that the storage described in this specification aims to include but is not limited to these storages and any memory of another proper type.

A person of ordinary skill in the art may be aware that, in combination with the examples described in embodiments disclosed in this specification, units and methods can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the protection scope of this application.

It may be clearly understood by the person skilled in the art that, for the purpose of convenient and brief description, for a detailed working process of the foregoing apparatus and unit, refer to corresponding processes in the foregoing method embodiments. Details are not described herein again.

In the several embodiments provided in this application, it should be understood that the disclosed apparatus and method may be implemented in other manners. For example, the described apparatus embodiment is merely an example. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or the units may be implemented in an electronic form, a mechanical form, or another form.

The units described as separate components may or may not be physically separate, and components displayed as units may or may not be physical units, that is, may be located in one location, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units are integrated into one unit.

All or a part of the foregoing embodiments may be implemented by using software, hardware, firmware, or any combination thereof. When the software is used for implementing the foregoing embodiments, all or a part of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk drive (solid state disk drive, SSD)), or the like. For example, the usable medium may include but is not limited to any medium that may store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A communication method, comprising:
obtaining, by a session management network element, service information, wherein the service information indicates one or more services supported by a satellite;
determining, by the session management network element based on the service information, whether a terminal device is allowed to access the services supported by the satellite; and
when determining that the terminal device is allowed to access at least one of the services supported by the satellite, inserting, by the session management network element, a user plane network element on the satellite into a user plane path of the terminal device.

2. The method according to claim 1, wherein the user plane network element on the satellite is a user plane network element that is on the satellite and that corresponds to a DNAI, wherein the DNAI identifies a user plane connection for accessing the services supported by the satellite.

3. The method according to claim 2, wherein the DNAI is determined based on location information of the terminal device and satellite backhaul type information of the terminal device.

4. The method according to claim 2, wherein the DNAI is determined based on location information of the terminal device, satellite backhaul type information of the terminal device, and identification information of the satellite.

5. The method according to claim 3 or 4, wherein the satellite backhaul type information indicates the terminal device to access the satellite by using geostationary earth orbit satellite backhaul.

6. The method according to claim 4, further comprising: receiving, by the session management network element, the satellite backhaul type information from a mobility management network element.

7. The method according to claim 4, further comprising: receiving, by the session management network element, the identifier of the satellite from a mobility management network element.

8. The method according to claim 1, wherein the method further comprises:
when determining that the terminal device is not allowed to access any one of the services supported by the satellite, skipping inserting, by the session management network element, the user plane network element on the satellite into the user plane path of the terminal device.

9. The method according to any one of claims 1 to 8, wherein the obtaining, by a session management network element, service information comprises:
determining, by the session management network element, a first data network access identifier based on the location information of the terminal device and the satellite backhaul type information corresponding to the terminal device; and
determining, by the session management network element, the service information based on the first data network access identifier and first configuration information, wherein the first configuration information comprises a correspondence between the first data network access identifier and the service information.

10. The method according to any one of claims 1 to 8, wherein the obtaining, by a session management network element, service information comprises:
obtaining, by the session management network element, the identification information of the satellite;
determining, by the session management network element, the service information based on the identification information of the satellite and second configuration information, wherein the second configuration information comprises a correspondence between the identification information of the satellite and the service information.

11. The method according to any one of claims 1 to 10, wherein the determining, by the session management network element based on the service information, whether a terminal device is allowed to access the services supported by the satellite comprises: receiving, by the session management network element, subscription data of the terminal device from a data management network element; and
determining, by the session management network element based on the subscription data and the service information, whether the terminal device is allowed to access the services supported by the satellite.

12. The method according to claim 11, wherein the subscription data comprises an identifier of the service that the terminal device is allowed to access; and
the determining, by the session management network element based on the service information, whether a terminal device is allowed to access the services supported by the satellite comprises:
if the service that the terminal device is allowed to access comprises at least one service indicated by the service information, determining, by the session management network element, that the terminal device is allowed to access the services supported by the satellite.

13. The method according to any one of claims 1 to 10, wherein the determining, by the session management network element based on the service information, whether a terminal device is allowed to access the services supported by the satellite comprises: receiving, by the session management network element, policy information of the terminal device from a policy control network element, wherein the policy information comprises an identifier of the service that the terminal device is allowed to access; and
determining, by the session management network element based on the policy information and the service information, whether the terminal device is allowed to access the services supported by the satellite.

14. The method according to any one of claims 1 to 10, further comprising: selecting, by the session management network element, the user plane network element on the satellite as a branching point.

15. The method according to any one of claims 1 to 10, further comprising: sending, by the session management network element, a traffic steering rule to the user plane network element on the satellite.

16. A communication apparatus, comprising:
a processing module, configured to obtain service information, wherein the service information indicates one or more services supported by a satellite;
the processing module is further configured to determine, based on the service information, whether a terminal device is allowed to access the services supported by the satellite; and
the processing module is further configured to: when determining that the terminal device is allowed to access at least one of the services supported by the satellite, insert a user plane network element on the satellite into a user plane path of the terminal device.

17. The apparatus according to claim 16, wherein the user plane network element on the satellite is a user plane network element that is on the satellite and that corresponds to a DNAI, wherein the DNAI identifies a user plane connection for accessing the services supported by the satellite.

18. The apparatus according to claim 17, wherein the DNAI is determined based on location information of the terminal device and satellite backhaul type information of the terminal device.

19. The apparatus according to claim 17, wherein the DNAI is determined based on location information of the terminal device, satellite backhaul type information of the terminal device, and identification information of the satellite.

20. The apparatus according to claim 18 or 19, wherein the satellite backhaul type information indicates the terminal device to access the satellite by using geostationary earth orbit satellite backhaul.

21. The apparatus according to claim 19, wherein the processing module is further configured to receive the satellite backhaul type information from a mobility management network element.

22. The apparatus according to claim 19, wherein the processing module is further configured to receive the identifier of the satellite from a mobility management network element.

23. The apparatus according to claim 16, wherein the processing module is further configured to: when determining that the terminal device is not allowed to access any one of the services supported by the satellite, skip inserting, by the session management network element, the user plane network element on the satellite into the user plane path of the terminal device.

24. The apparatus according to any one of claims 16 to 23, wherein the processing module is specifically configured to: determine a first data network access identifier based on the location information of the terminal device and the satellite backhaul type information corresponding to the terminal device; and
determine the service information based on the first data network access identifier and first configuration information, wherein the first configuration information comprises a correspondence between the first data network access identifier and the service information.

25. The apparatus according to any one of claims 16 to 23, wherein the processing module is specifically configured to: obtain the identification information of the satellite; and
determine the service information based on the identification information of the satellite and second configuration information, wherein the second configuration information comprises a correspondence between the identification information of the satellite and the service information.

26. The apparatus according to any one of claims 16 to 25, wherein the processing module is specifically configured to: receive subscription data of the terminal device from a data management network element by using a transceiver module; and
determine, based on the subscription data and the service information, whether the terminal device is allowed to access the services supported by the satellite.

27. The apparatus according to claim 26, wherein the subscription data comprises an identifier of the service that the terminal device is allowed to access; and
if the service that the terminal device is allowed to access comprises at least one service indicated by the service information, the processing module is specifically configured to determine that the terminal device is allowed to access the services supported by the satellite.

28. The apparatus according to any one of claims 16 to 25, wherein the processing module is specifically configured to: receive policy information of the terminal device from a policy control network element by using a transceiver module, wherein the policy information comprises an identifier of the service that the terminal device is allowed to access; and
determine, based on the policy information and the service information, whether the terminal device is allowed to access the services supported by the satellite.

29. The apparatus according to any one of claims 16 to 25, wherein the processing module is further configured to select the user plane network element on the satellite as a branching point.

30. The apparatus according to any one of claims 16 to 25, further comprising a transceiver module, wherein the transceiver module is configured to send a traffic steering rule to the user plane network element on the satellite.

31. A communication apparatus, comprising at least one processor, wherein the at least one processor is coupled to at least one storage, and is configured to execute a computer program or instructions stored in the at least one storage, so that the communication apparatus implements the method according to any one of claims 1 to 15.

32. A chip, comprising a processor and a communication interface, wherein the communication interface is configured to receive data and/or information and transmit received data and/or information to the processor, and the processor processes the data and/or information, to perform the method according to any one of claims 1 to 15.

33. A computer-readable storage medium, wherein the computer-readable storage medium stores a computer program, and when the computer program is executed, the method according to any one of claims 1 to 15 is performed.

34. A computer program product comprising instructions, wherein when the computer program product is run on a computer, the computer is enabled to perform the method according to any one of claims 1 to 15.

## Amended claims

### Amended claims under Art. 19.1 PCT

1. A communication method, comprising:
obtaining, by a session management network element, service information, wherein the service information indicates one or more services supported by a satellite;
determining, by the session management network element based on the service information, whether a terminal device is allowed to access the services supported by the satellite; and
when determining the terminal device is allowed to access at least one of the services supported by the satellite, inserting, by the session management network element, a user plane network element on the satellite into a user plane path of the terminal device.

2. The method according to claim 1, wherein the user plane network element on the satellite is a user plane network element that is on the satellite and that corresponds to a DNAI, wherein the DNAI identifies a user plane connection for accessing the services supported by the satellite.

3. The method according to claim 2, wherein the DNAI is determined based on location information of the terminal device and satellite backhaul type information of the terminal device.

4. The method according to claim 2, wherein the DNAI is determined based on location information of the terminal device, satellite backhaul type information of the terminal device, and identification information of the satellite.

5. The method according to claim 3 or 4, wherein the satellite backhaul type information indicates the terminal device to access the satellite by using geostationary earth orbit satellite backhaul.

6. The method according to claim 4, further comprising: receiving, by the session management network element, the satellite backhaul type information from a mobility management network element.

7. The method according to claim 4, further comprising: receiving, by the session management network element, the identifier of the satellite from a mobility management network element.

8. The method according to claim 1, wherein the method further comprises:
when determining to that the terminal device is not allowed to access any one of the services supported by the satellite, skipping inserting, by the session management network element, the user plane network element on the satellite into the user plane path of the terminal device.

9. The method according to any one of claims 1 to 8, wherein the obtaining, by a session management network element, service information comprises:
determining, by the session management network element, a first data network access identifier based on the location information of the terminal device and the satellite backhaul type information corresponding to the terminal device; and
determining, by the session management network element, the service information based on the first data network access identifier and first configuration information, wherein the first configuration information comprises a correspondence between the first data network access identifier and the service information.

10. The method according to any one of claims 1 to 8, wherein the obtaining, by a session
management network element, service information comprises:
obtaining, by the session management network element, the identification information of the satellite;
determining, by the session management network element, the service information based on the identification information of the satellite and second configuration information, wherein the second configuration information comprises a correspondence between the identification information of the satellite and the service information.

11. The method according to any one of claims 1 to 10, wherein the determining, by the session management network element based on the service information, whether a terminal device is allowed to access the services supported by the satellite comprises: receiving, by the session management network element, subscription data of the terminal device from a data management network element; and
determining, by the session management network element based on the subscription data and the service information, whether the terminal device is allowed to access the services supported by the satellite.

12. The method according to claim 11, wherein the subscription data comprises an identifier of the service that the terminal device is allowed to access; and
the determining, by the session management network element based on the service information, whether a terminal device is allowed to access the services supported by the satellite comprises:
if the service that the terminal device is allowed to access comprises at least one service indicated by the service information, determining, by the session management network element, the terminal device is allowed to access the services supported by the satellite.

13. The method according to any one of claims 1 to 10, wherein the determining, by the session management network element based on the service information, whether a terminal device is allowed to access the services supported by the satellite comprises: receiving, by the session management network element, policy information of the terminal device from a policy control network element, wherein the policy information comprises an identifier of the service that the terminal device is allowed to access; and
determining, by the session management network element based on the policy information and the service information, whether the terminal device is allowed to access the services supported by the satellite.

14. The method according to any one of claims 1 to 10, further comprising: selecting, by the session management network element, the user plane network element on the satellite as a branching point.

15. The method according to any one of claims 1 to 10, further comprising: sending, by the session management network element, a traffic steering rule to the user plane network element on the satellite.

16. A communication apparatus, comprising:
a processing module, configured to obtain service information, wherein the service information indicates one or more services supported by a satellite;
the processing module is further configured to determine, based on the service information, whether a terminal device is allowed to access the services supported by the satellite; and
the processing module is further configured to: when determining the terminal device is allowed to access at least one of the services supported by the satellite, insert a user plane network element on the satellite into a user plane path of the terminal device.

17. The apparatus according to claim 16, wherein the user plane network element on the satellite is a user plane network element that is on the satellite and that corresponds to a DNAI, wherein the DNAI identifies a user plane connection for accessing the services supported by the satellite.

18. The apparatus according to claim 17, wherein the DNAI is determined based on location information of the terminal device and satellite backhaul type information of the terminal device.

19. The apparatus according to claim 17, wherein the DNAI is determined based on location information of the terminal device, satellite backhaul type information of the terminal device, and identification information of the satellite.

20. The apparatus according to claim 18 or 19, wherein the satellite backhaul type information indicates the terminal device to access the satellite by using geostationary earth orbit satellite backhaul.

21. The apparatus according to claim 19, wherein the processing module is further configured to receive the satellite backhaul type information from a mobility management network element.

22. The apparatus according to claim 19, wherein the processing module is further configured to receive the identifier of the satellite from a mobility management network element.

23. The apparatus according to claim 16, wherein the processing module is further configured to: when determining that the terminal device is not allowed to access any one of the services supported by the satellite, skip inserting, by the session management network element, the user plane network element on the satellite into the user plane path of the terminal device.

24. The apparatus according to any one of claims 16 to 23, wherein the processing
module is specifically configured to: determine a first data network access identifier based on the location information of the terminal device and the satellite backhaul type information corresponding to the terminal device; and
determine the service information based on the first data network access identifier and first configuration information, wherein the first configuration information comprises a correspondence between the first data network access identifier and the service information.

25. The apparatus according to any one of claims 16 to 23, wherein the processing
module is specifically configured to: obtain the identification information of the satellite; and
determine the service information based on the identification information of the satellite and second configuration information, wherein the second configuration information comprises a correspondence between the identification information of the satellite and the service information.

26. The apparatus according to any one of claims 16 to 25, wherein the processing module is specifically configured to: receive subscription data of the terminal device from a data management network element by using a transceiver module; and determine, based on the subscription data and the service information, whether the terminal device is allowed to access the services supported by the satellite.

27. The apparatus according to claim 26, wherein the subscription data comprises an identifier of the service that the terminal device is allowed to access; and
if the service that the terminal device is allowed to access comprises at least one service indicated by the service information, the processing module is specifically configured to determine the terminal device is allowed to access the services supported by the satellite.

28. The apparatus according to any one of claims 16 to 25, wherein the processing module is specifically configured to: receive policy information of the terminal device from a policy control network element by using a transceiver module, wherein the policy information comprises an identifier of the service that the terminal device is allowed to access; and
determine, based on the policy information and the service information, whether the terminal device is allowed to access the services supported by the satellite.

29. The apparatus according to any one of claims 16 to 25, wherein the processing module is further configured to select the user plane network element on the satellite as a branching point.

30. The apparatus according to any one of claims 16 to 25, further comprising a transceiver module, wherein the transceiver module is configured to send a traffic steering rule to the user plane network element on the satellite.

31. [Added] A communication method, comprising:
determining, by a mobility management network element based on location information of a terminal device, identification information of a satellite accessed by the terminal device; and
sending, by the mobility management network element, the identification information of the satellite accessed by the terminal device, to a session management network element.

32. [Added] The method according to claim 31, wherein the identification information of the satellite accessed by the terminal device is used for determining a service supported by the satellite accessed by the terminal device.

33. [Added] The method according to claim 31 or 32, wherein the determining, by a mobility management network element based on location information of a terminal device, identification information of a satellite accessed by the terminal device comprises: determining, by the mobility management network element based on locally stored configuration information and the location information of the terminal device, the identification information of the satellite accessed by the terminal device.

34. [Added] The method according to any one of claims 31 to 33, wherein the identification information of the satellite accessed by the terminal device is used for determining a first data network access identifier.

35. [Modified] A communication apparatus, comprising at least one processor, wherein the at least one processor is coupled to at least one storage, and is configured to execute a computer program or instructions stored in the at least one storage, so that the communication apparatus implements the method according to any one of claims 1 to 15 or claims 31 to 34.

36. [Modified] A chip, comprising a processor and a communication interface, wherein the communication interface is configured to receive data and/or information and transmit received data and/or information to the processor, and the processor processes the data and/or information, to perform the method according to any one of claims 1 to 15 or claims 31 to 34.

37. [Modified] A computer-readable storage medium, wherein the computer-readable storage medium stores a computer program, and when the computer program is executed, the method according to any one of claims 1 to 15 or claims 31 to 34 is performed.

38. [Modified] A computer program product comprising instructions, wherein when the computer program product is run on a computer, the computer is enabled to perform the method according to any one of claims 1 to 15 or claims 31 to 34.

39. [Added] A communication system, comprising a session management network element and a mobility management network element, wherein the session management network element is configured to perform the method according to any one of claims 1 to 15, and the mobility management network element is configured to perform the method according to any one of claims 31 to 34.
